# EUROPEAN PATENT SPECIFICATION

(11) **EP 2 456 971 B1**
(45) Date of publication and mention of the grant of the patent: **19.08.2015**
(21) Application number: 09847664.1
(22) Date of filing: 27.10.2009
(51) Int. Cl.: F04B 17/00

(54) **PLIANT MECHANISMS FOR EXTRACTING POWER FROM MOVING FLUID**
BIEGSAMER MECHANISMUS ZUR UMWANDLUNG VON ENERGIE AUS EINER FLÜSSIGKEIT IN BEWEGUNG
MÉCANISMES DÉFORMABLES POUR EXTRAIRE LA PUISSANCE D'UN FLUIDE EN MOUVEMENT

(30) Priority: 21.07.2009 US 227279 P
(43) Date of publication of application: 30.05.2012
(73) Proprietor: Pliant Energy Systems Llc, Brooklyn, NY 11205-1072 (US)
(72) Inventor: FILARDO, Benjamin Pietro, New York, New York 10022 (US)
(74) Representative: Clarke, Geoffrey Howard
(86) International application number: PCT/US2009/062257
(87) International publication number: WO 2011/011026

(56) References cited:
- US-A- 4 488 854
- US-A- 6 153 944
- US-A1- 2002 146 333
- US-A1- 2006 192 389
- US-A1- 2008 129 254
- US-A1- 2008 229 745
- US-A1- 2009 134 623
- US-B1- 6 424 079
- US-B2- 7 470 086
- US-B2- 7 492 054

## Description

### PRIORITY CLAIM

This application claims priority to prior U.S. provisional patent application serial number 61/227,279 entitled, "Compliant Elements," filed on July 21, 2009 (Attorney Docket no. 19861-003PV).

### BACKGROUND

The energy of moving water has been utilized by man for thousands of years and has been harnessed to generate electricity since the 19^{th} century. Today power harnessed from moving water supplies 20% of global electricity demand and is by far the largest source of renewable energy. Electricity from a typical hydroelectric mechanism is generated by harnessing the forces of moving water via kinetic-energy-receiving turbine-blades, which transfer these forces into the rotational movement of a shaft, which turns an electro-magnetic generator. Many of the mechanical systems currently employed for hydroelectric energy conversion have a variety of different problems, inefficiencies and shortcomings. Same examples are disclosed in US 6,424,079 or US 2002/014633.

### SUMMARY

The potential advantages of turbine-free power generation include economy of design with fewer or no articulated moving parts and potentially greater efficiency. The various implementations described herein encompass a range of mechanisms that apply principles for the creation of scalable hydro-electric generators, and may employ any of a variety of advanced materials in various implementations. Other described implementations utilize shared and unique elements of apparatuses and methods herein to power electromagnetic generators.

One non-exclusive application of embodiments described herein is in the field of so-called "free-flow" or "run-of-the-river" hydroelectric power generation, where the kinetic energy of rivers, streams or tidal currents is harnessed without the need for dams. A dam built in the path of flowing water creates a high energy potential differential above and below the dam, allowing water to pass through turbines at high speed and pressure. However, dams are expensive to construct and have a high environmental impact.

Some embodiments described herein are directed to extracting power from a moving current of fluid with flexible mechanisms, and more specifically to providing power generators for converting the kinetic energy of fluid motion into useable mechanical energy and/or electrical energy.

Efforts to harness the low-speed-high-volume flow of naturally-occurring waterways have not yet proven viable largely due to the following: (1.) the high-cost of the energy-harnessing mechanisms relative to the low quantity of energy harnessed; (2.) the physical vulnerability of existing energy-harnessing mechanisms. With embodiments described herein, problem 1 is solved with the utilization of large "capture" surface-areas that collectively harness a significant quantity of energy using, in some implementations, a cheap mass-produced material. Problem 2 is solved because the embodiments include flexible components which are more capable of deflecting or absorbing shocks such as an impacting log or tree branch. A further and related advantage is a more gentle physical interaction with fish and other aquatic animals.

In addition to the advantages described for free-flow hydropower generation, embodiments described herein may also be applicable as an alternative to conventional turbines in dammed hydropower installations, and certain embodiments may be designed to power a conventional electromagnetic generator, or other power output device such as a pump.

In various embodiments, elements of the described pliant mechanisms may utilize a sheet-like elastic material which may be comprised of a single layer, multiple layers, a woven mesh or other composite sheet-like elastic material, and where said sheet-like material has been deformed, and therefore strained, with an applied first force. The material may accommodate this applied first force through a combination of deflection, compression, stretching and twisting of the material. If the material is appropriately restrained prior to the removal of this applied first force, such as with a deformation-retaining component, the energy of this applied force will remain as potential energy within the material.

The shape of this material in its relaxed state prior to the application the first force is defined by the spatial arrangement of molecules within the material. After the application of this first force and the restraining of the material so that this first force is maintained as potential energy within the material, the shape of the material is defined by the spatial arrangement of its molecules but also by its internal energy state, which, with the introduction of a second force, can take on a virtually infinite number of configurations.

The mechanisms described herein may utilize one or more undulations in said material, where these undulations result from a first force applied to the material, and where these undulations are maintained in existence but not in position, by at least one deformation-retaining or restraining component. When a length of this material prepared in this way is then secured, anchored or tethered in moving fluid, and arranged so that the longitudinal axis of the length of material is parallel to the direction of the moving fluid, the upstream-sides of the material's undulations will obliquely face the direction of the movement of the fluid, and be subjected to the vector forces of the moving fluid. Therefore, higher water pressures will result on the upstream-facing surfaces of the undulations in the material. Conversely, the downstream surfaces of the undulations will experience lower water pressures. The pressure differential between the upstream and downstream surfaces of the undulations causes the positions of the undulations within the material to move in the direction of the moving fluid.

The presence of undulations in the material is an expression of internal forces held as potential energy within the material by a deformation-retaining component. Therefore, when an undulation being moved along the length of material moves off the end of this length of material, a new undulation may take its place at the upstream end of this length of material, because the internal energy state of this length of material has not substantially changed, and the undulations are an expression of restrained forces within the material.

Some implementations may be described in relation to two categories, or "groups" for clarity of explanation. The implementations in the first group utilize a single ribbon or a plurality of ribbons, said ribbons being made of a flexible or elastic sheet of material as described above. During operation of the mechanisms, this ribbon maintains a uniform or substantially uniform width. Said ribbon of material as described may be referred to as a "frond".

The embodiments of this first group incorporate fronds, and may be categorized for convenience by their visual appearance when viewed from a section plane cut perpendicular to the direction of fluid movement. Said first group is comprised of at least: A parallel array, an asterisk, a polygonal ring, a dodecagonal honeycomb, an octagonal honeycomb, and/or the like.

The embodiments of the second group may lack the fronds common to embodiments of the first group. The embodiments of this second group are comprised of a tube of the same or similar material as described above, but do not require the incorporation of fronds into their structure. The embodiments of this second group are further categorized for convenience by their visual appearance when viewed from a section plane cut perpendicular to the direction of fluid movement. Said second group is comprised of at least a first hexagonal honeycomb, second hexagonal honeycomb, concentric rings, and/or the like.

Embodiments of the first group contain single fronds or fronds connected to each other along their longitudinal axes in various ways, including in a manner which forms tubes, and in a manners whereby said tubes connect laterally to one another to create honeycomb-like patterns.

In some implementations, the tubes of the second group may be comprised either of circular tubes of different diameters arranged concentrically one within another, or of polygonal tubes connected to each other laterally to create honey-comb like patterns. The sides of the polygonal tubes in this second group vary in width during operation, whereas the widths of the fronds that comprise the sides of tubes in the first group remain constant or substantially constant during operation.

In some implementations, the overall diameters of tubes comprised of fronds may remain constant or substantially constant under operation whereas the overall diameter of tubes without fronds may periodically increase and decrease under operation,

The deformations in material described above will remain so long as the material is prevented from returning to its relaxed state by at least one deformation-retaining component. Since many of the embodiments utilize a plurality of deformations along a single length of material, another aspect of the mechanisms is a method for preventing the wave undulations in said length of material from combining into one single, larger deformation. Various methods and configurations are described in the detailed description as to how this summing together of multiple deformations into a single deformation is prevented, thereby maintaining a series of wave undulations along the longitudinal axis of the material.

Power may be harnessed by implementations of the mechanisms described herein in a variety of ways. For example, as the forces of the moving water cause the wave undulations to move along the fronds, strains and stresses are created within the sheet-like material or composite sheet-like material that comprise the fronds or tubes. This sheet-like material consists in whole or in part of a material which exhibits an electrical response to strains exerted within the material. As the wave undulations move along the material in the direction of the moving fluid, strains also move through the material in the direction of the moving fluid, and electrical energy is generated from these strains in the material. Examples of such materials may include electroactive polymers (EAPs), which may exhibit electrostrostrictive, electrostatic, piezoelectric, and/or pyroelectric responses to electrical or mechanical fields, as well as ionic EAPs, shape memory alloys, and nano-wires. Other materials and/or types of materials may also be employed depending on the particular needs and or requirements of an implementation. At least two electrodes may be utilized for embodiments extracting power in this first way.

Another example of energy harnessing by implementations of the mechanisms herein is by coupling the mechanical action of the traveling, undulating motions of the material to a shaft, axle or other mechanical device. With some implementations utilizing an axle, the axle may turn an electromagnetic generator or other output device such as a pump.

Embodiments described herein do not rely on vortex currents to force the energy harnessing components of the embodiments into a morphology that is able to harness energy. When subject to the forces of moving fluid, the morphologies of the energy-harnessing components of described implementations may fluctuate, such as in a periodic manner, between states that lie within a range of possible morphology configurations. When not subject to the forces of moving fluid, the morphologies of the energy harnessing components of these mechanisms may remain fixed in just one morphology configuration within that range. The mechanisms described herein are capable of receiving the forces of moving fluid regardless of whether the flow is laminar or turbulent.

### BRIEF DESCRIPTION OF DRAWINGS

**FIG. 1A** illustrates principles underlying the preparation and operation of various implementations of pliant mechanisms.
**FIG. 1B** is a diagram illustrating an implementation of logic flow for the creation and operation of an embodiment of pliant mechanisms utilizing a flexible electroactive material;
**FIG. 1C** is a diagram illustrating an implementation of logic flow for the creation and operation of an embodiment pliant mechanisms utilizing the deflection of a flexible material;
**FIG. 2A** is a diagram showing the internal energy state at rest of an undulation in the material of a component of one embodiment of pliant mechanisms;
**FIG. 2B** is a diagram showing how energy is extracted from an embodiment of pliant mechanisms utilizing a flexible electroactive material;
**FIG. 2C** is a diagram showing how energy is extracted from an embodiment of pliant mechanisms utilizing a flexible material coupled to a mechanical output;
**FIG. 3A** illustrates how a frond is formed in one embodiment;
**FIGs. 3B-C** illustrate how flexible or elastic crenated strips are formed in one embodiment;
**FIG. 3D** illustrates how the frond is combined with the flexible or elastic crenated strips, in accordance with an embodiment;
**FIG. 3E** illustrates a perspective view of the arrangement of a frond and two connecting flexible or elastic crenated strips in one embodiment;
**FIGs. 4A-B** illustrate the morphology of the flexible or elastic crenated strip in an embodiment;
**FIG. 4C** illustrates how a first crenated strip and a second crenated strip are attached together to form a double crenated strip in an embodiment;
**FIG. 4D** illustrates an array of rigid members inserted into the double crenated strip, in accordance with one embodiment;
**FIG. 4E** illustrates how the double crenated strip is configured with and attached to adjacent fronds in one embodiment;
**FIG. 4F** illustrates a schematic view of the positions of wave undulations of two connected fronds adjacent to each other and with respect to a direction of the fluid flow in one embodiment;
**FIG. 4G** illustrates a pressure differential across wave undulations of a frond in one embodiment;
**FIG. 5** illustrates a frond with a minimum number of wave undulations per frond for one embodiment;
**FIG. 6A** illustrates a frond line implementation;
**FIG. 6B** illustrates a parallel array of a plurality of frond lines in one implementation;
**FIG. 7A-E** illustrate one method for assembling one double-layered frond embodiment;
**FIGs. 8A-C** illustrate an asterisk formed by a plurality of fronds, crenated strips and deformation-retaining components in one embodiment;
**FIG. 8D** illustrates the mechanical coupling to a rotating axle of an asterisk formed by a plurality of fronds, crenated strips and deformation-retaining components in one implementation;
**FIG. 8E** illustrates a detail of a mechanical coupling to a rotating axle for an embodiment;
**FIG. 9** illustrates stiffening, synchronizing and rotating components for an embodiment;
**FIG. 10** references points of section cuts shown in **FIGs. 11A-I** during one cycle of operation of an asterisk implementation;
**FIGs. 11A-I** illustrate a series of sections cut through the asterisk at a given position, during one cycle of operation of an embodiment;
**FIGs. 12A-B** illustrate various mechanical couplings and the fronds in an asterisk implementation;
**FIGs. 12C-D** illustrate the use of rigid plates, instead of elastic plates in an implementation;
**FIG. 12E** illustrates a coupling of rigid plates to an axle for mechanical power output in an implementation;
**FIG. 12F** illustrates a detail of a mechanical ratcheted coupling of rigid plates to an axle for mechanical power output in an implementation;
**FIGs**. **13A-E** illustrates a series of sections cut through an asterisk at a given position, during one cycle of operation, while **FIG. 13F** illustrates the corresponding cycle of operation in an implementation;
**FIG. 14** and **FIGs. 15A-D** illustrate a non-free-flow application of an asterisk implementation;
**FIGs. 16A-B** illustrate two partial section cuts showing a series of moving pockets formed inside a rigid tube of an asterisk implementation;
**FIGs. 17A-C** illustrate aspects of an asymmetric frond embodiment which may be utilized for pumping;
**FIGs. 17 D-H** illustrate end-on views of an asymmetric frond embodiment during one half cycle of operation;

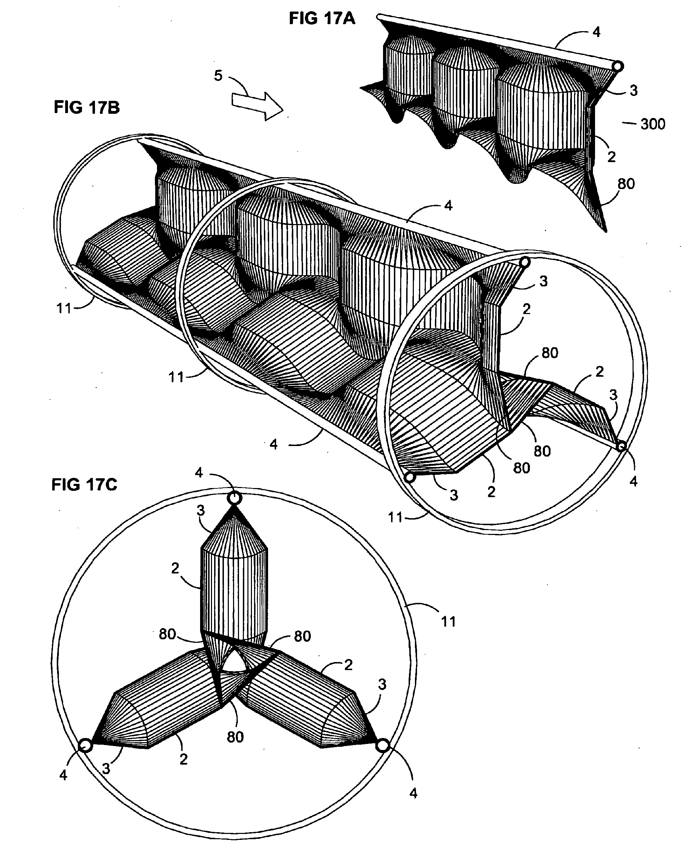

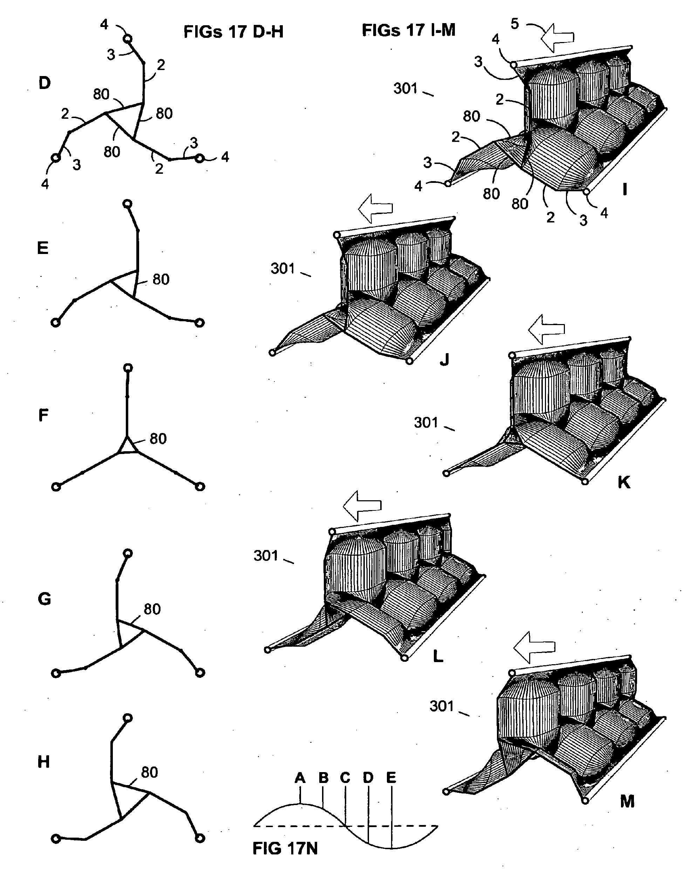

**FIGs. 17 I-M** illustrate perspective views of the asymmetric frond embodiment during one half cycle of operation as shown in **FIGs. 17D****-H;**
**FIG. 17N** indicates positions within one half cycle of operation that **FIGs. 17C-G** and **FIGs. 17H-L** illustrate in one embodiment;

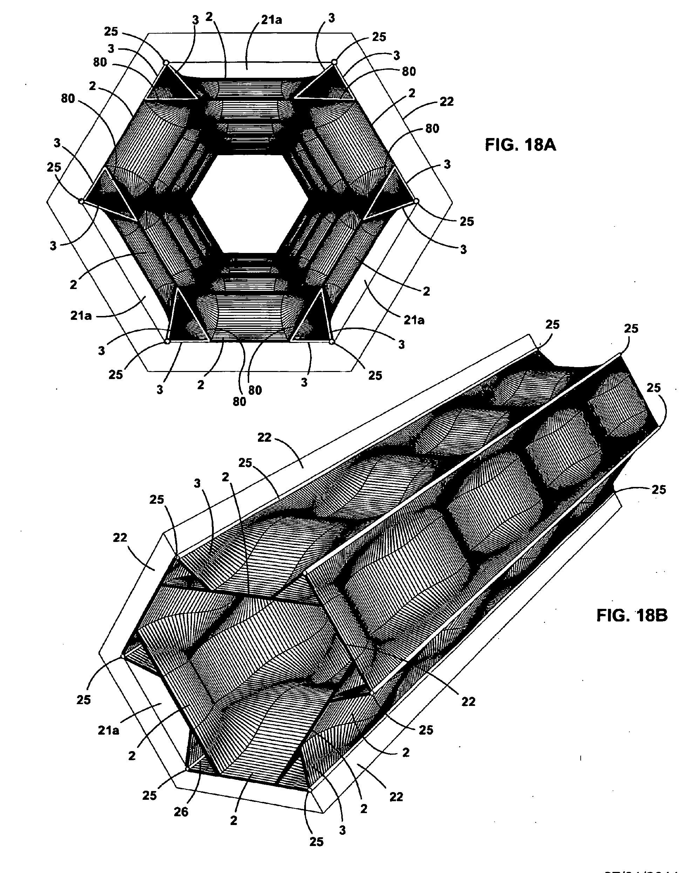

**FIGs. 18A-B** illustrate a hexagonal ring implementation formed by six fronds;

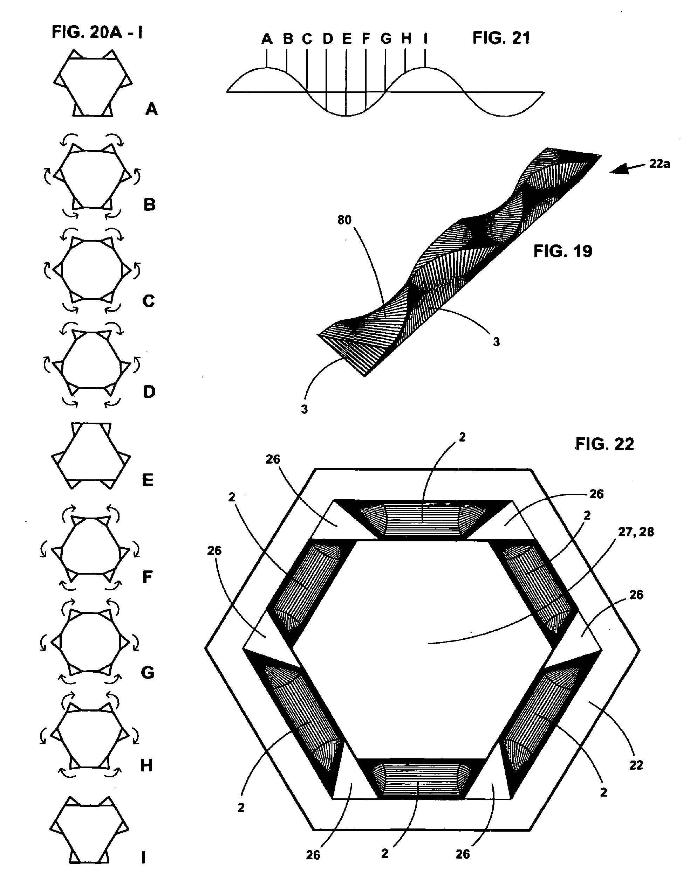

**FIG. 19** illustrates one of the three-sided tubes positioned at the corners of the hexagonal ring of fronds in one implementation;
**FIGs. 20A-I** illustrate a series of sections cut through the hexagonal ring of fronds at a given point during one cycle of operation in one implementation;
**FIG. 21** illustrates the cycle of operation corresponding to Figs. 20A-I in one implementation;

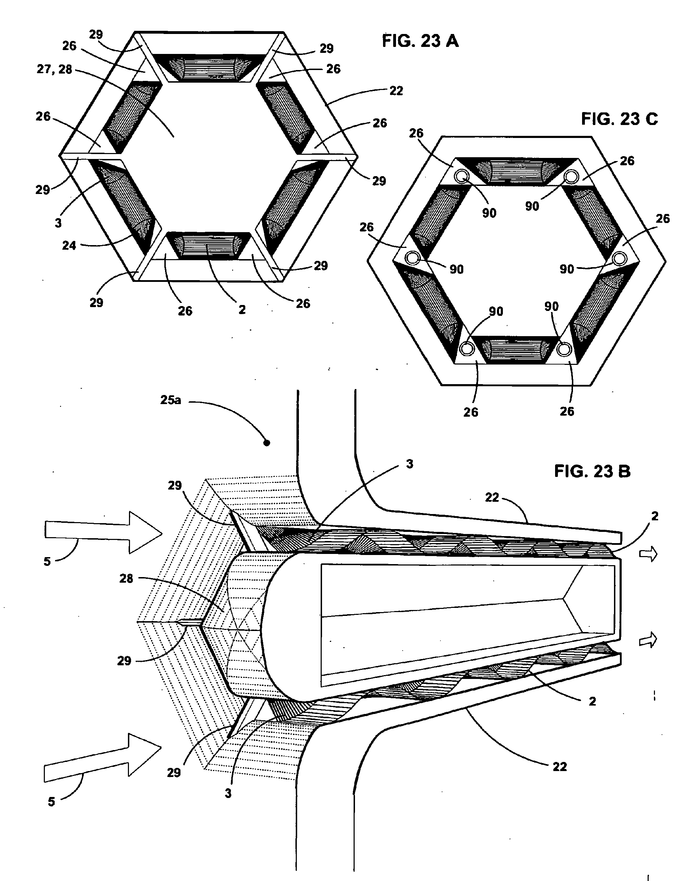

**FIG. 22** and **FIGs. 23A-B** illustrate a polygonal ring implementation that may be utilized in non free-flow implementations in one embodiment;

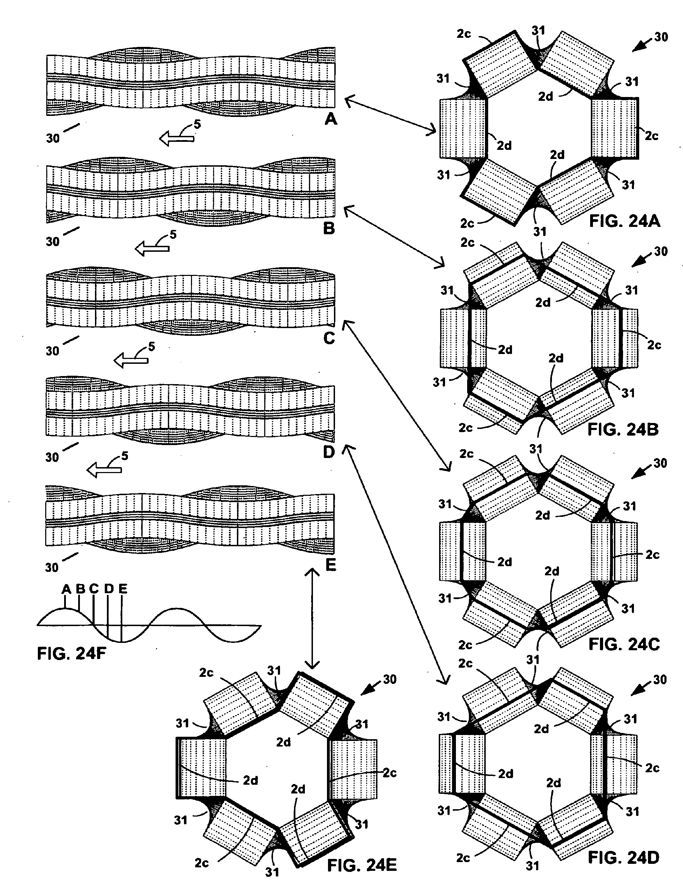

**FIGs. 24A-E** illustrate a series of sections cut through a hexagonal ring of fronds that comprise the dodecagonal honeycomb at a given point, during one half of a cycle of operation in one implementation;
**FIG. 24F** illustrates the one half of a cycle of operation corresponding to Figs. 24A-E in one implementation;

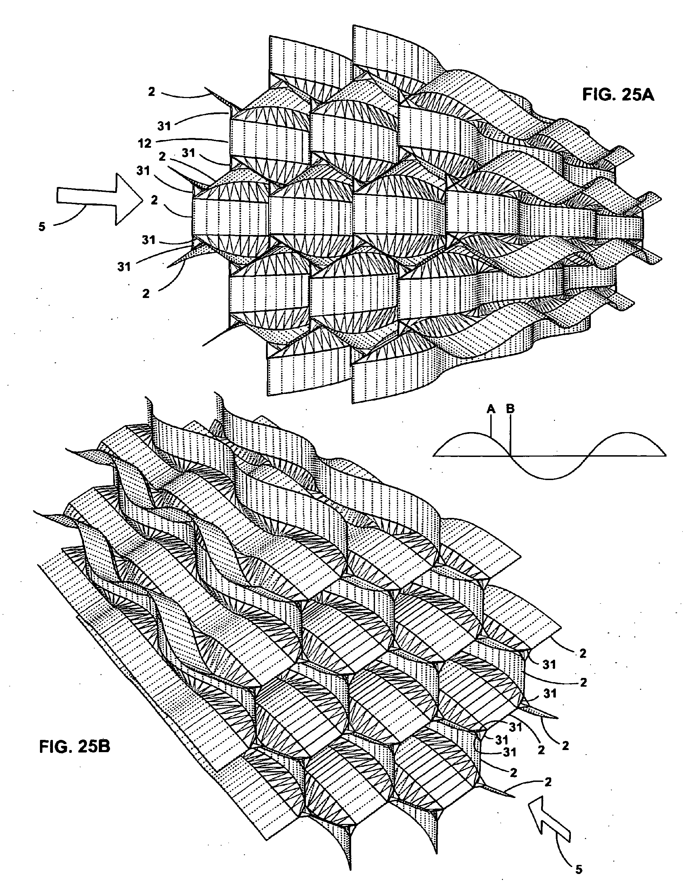

**FIGs. 25A-B** illustrate two sections cuts through a dodecagonal honeycomb formed by a plurality of dodecagonal-shaped tubes, each tube comprised of a ring of fronds and connecting strips, at two different positions within a cycle of operation in one implementation;

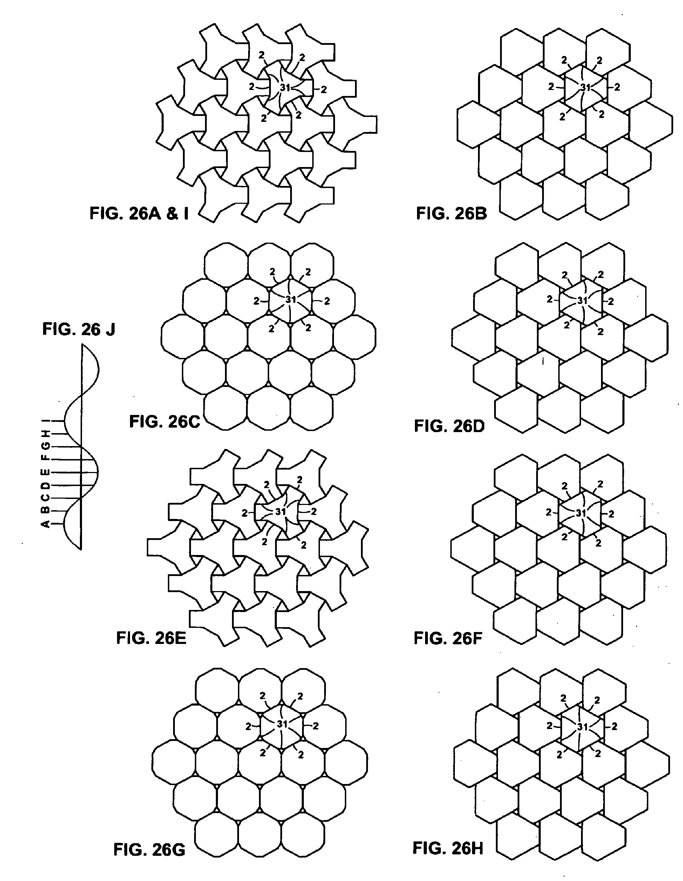

**FIGs. 26A-I** illustrate a series of sections cut through a dodecagonal honeycomb implementation at a given position during one cycle of operation in one implementation;
**FIG. 26J** locates the position corresponding to Figs. 26A-I within one cycle of operation in one implementation;

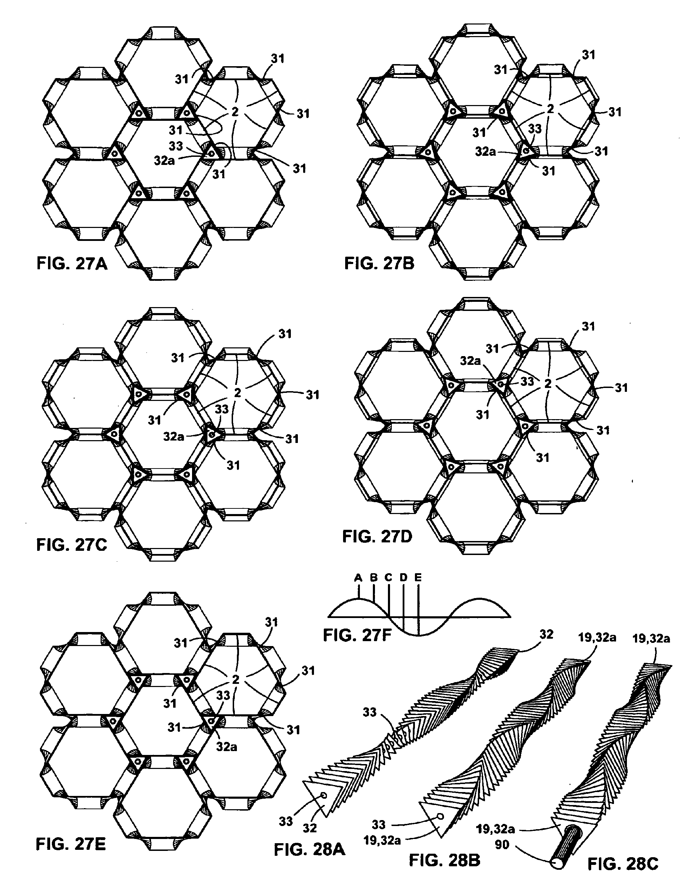

**FIGs. 27A-E** illustrate a series of sections cut through a dodecagonal honeycomb at a given position, during one half cycle of operation in one implementation;
**FIG. 27F** locates the position corresponding to Figs. 27A-E within the one half cycle of operation in one implementation;
**FIG. 28A** illustrates the arrangement of elastic plates in an implementation;
**FIG. 28B** illustrates the arrangement of non-elastic plates in an implementation;
**FIG. 28C** illustrates the mechanical coupling of rigid plates to an axle for mechanical power output in an implementation;

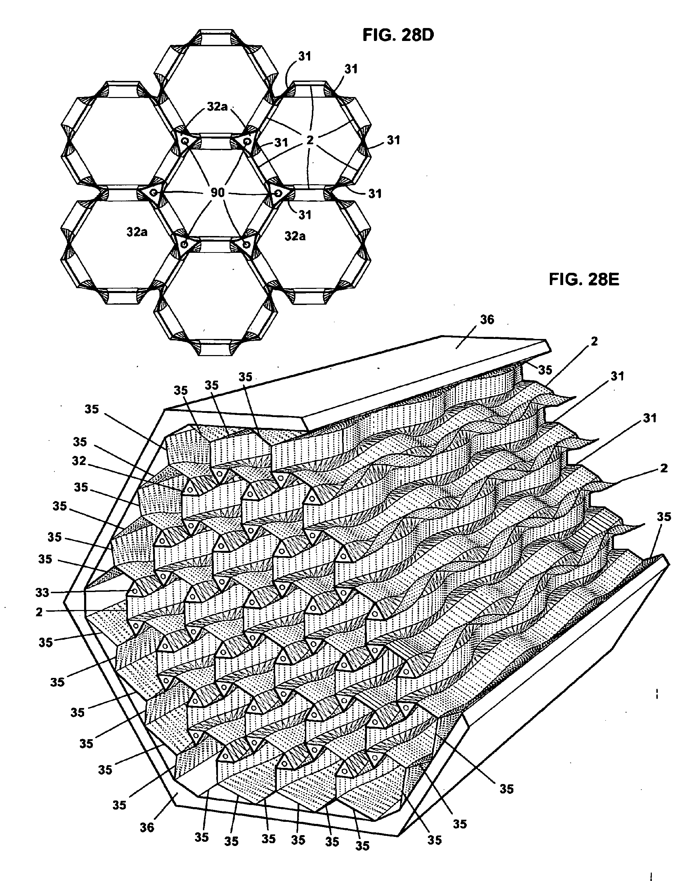

**FIG. 28D** illustrates the relationship of a dodecagonal tube with rigid plates and an axle to surrounding dodecagonal tubes in an implementation;
**FIG. 28E** illustrates how a dodecagonal honeycomb implementation may be restrained in an implementation;

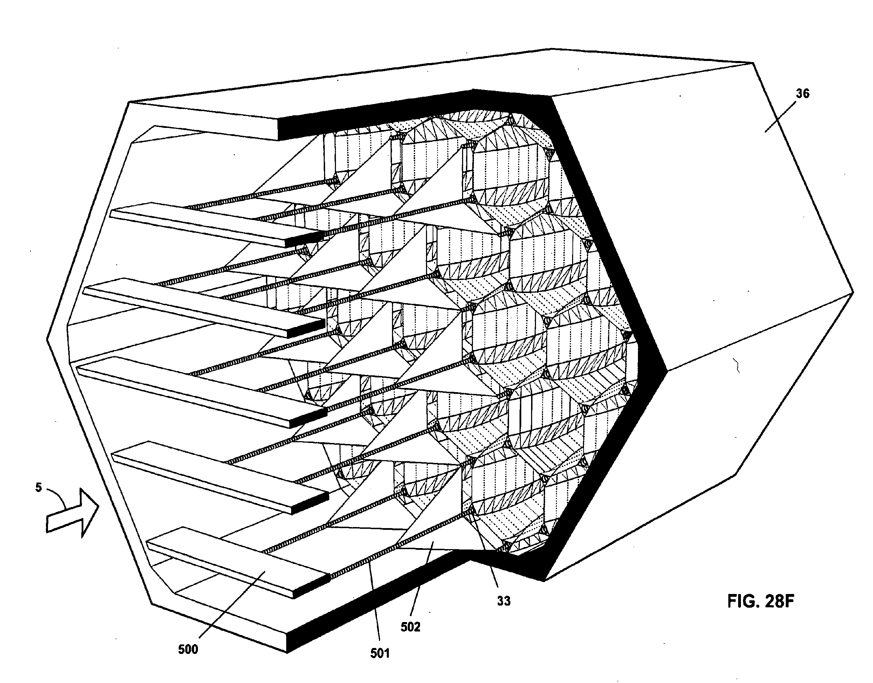

**FIG. 28F** is a cutaway section illustrating secondary structure for securing dodecagonal tubes in an implementation;

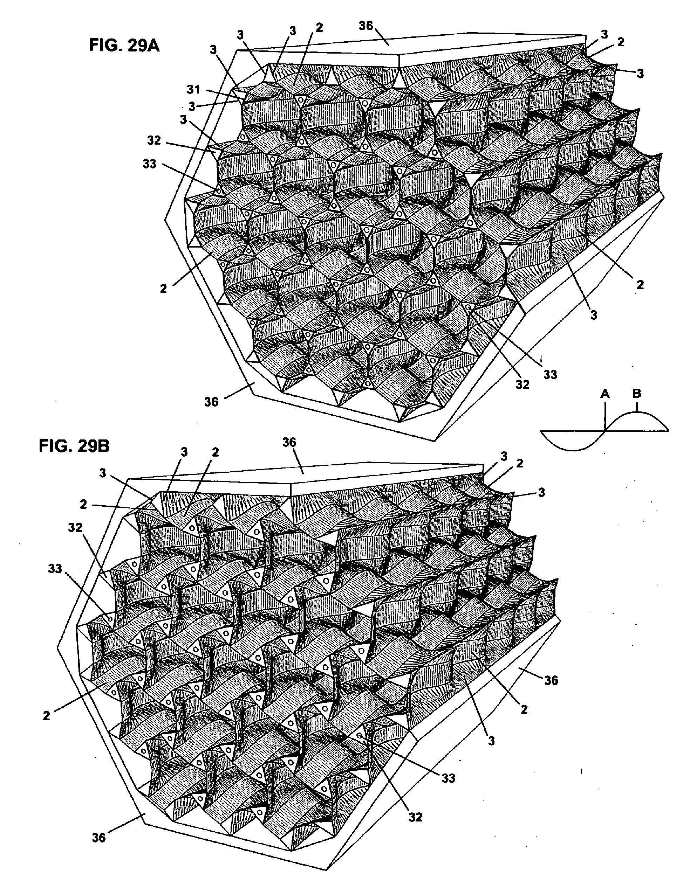

**FIGs. 29A-B** illustrate how the dodecagonal honeycomb may be attached to a polygonal outer-casing in an implementation;

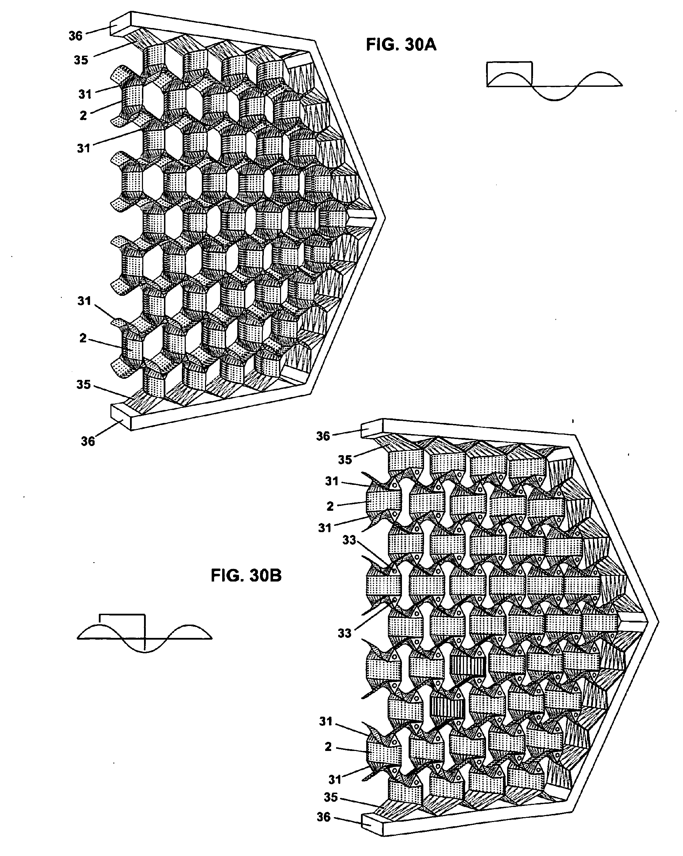

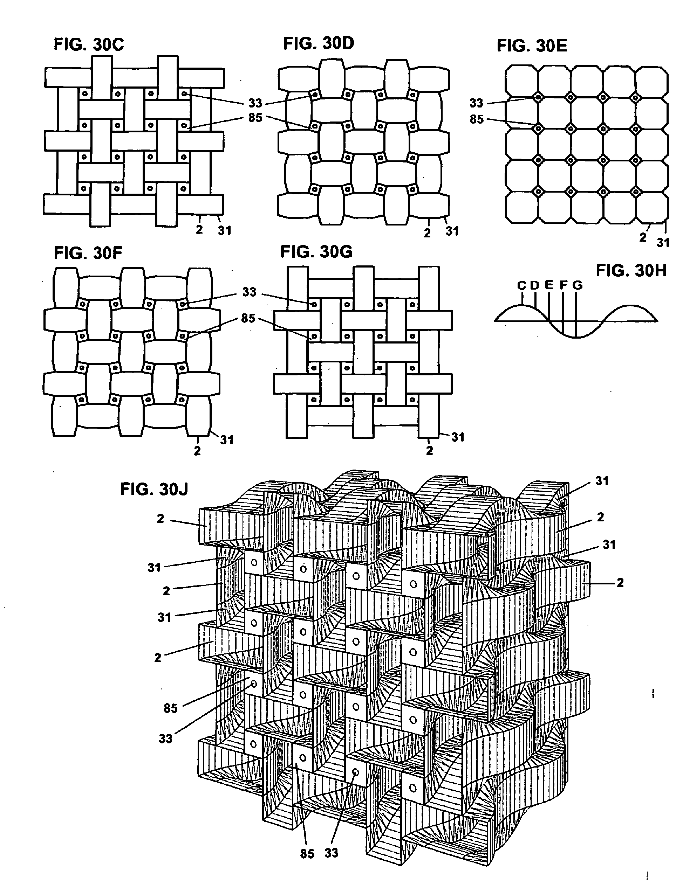

**FIGs. 30A-B** illustrate an example of a minimum portion of the wave cycle utilized for dodecagonal-shaped tubes in one implementation;
**FIGs. 30C-G** illustrate a series of sections cut through the same point during one half of a cycle of operation of an octagonal honeycomb implementation;
**FIG. 30H** illustrates the position of a series of section cuts within half a cycle of operation of an implementation;
**FIG. J** illustrates an octagonal honeycomb formed by a plurality of octagonal tubes, each octagonal tube comprised of a ring of fronds and connecting strips in one implementation;

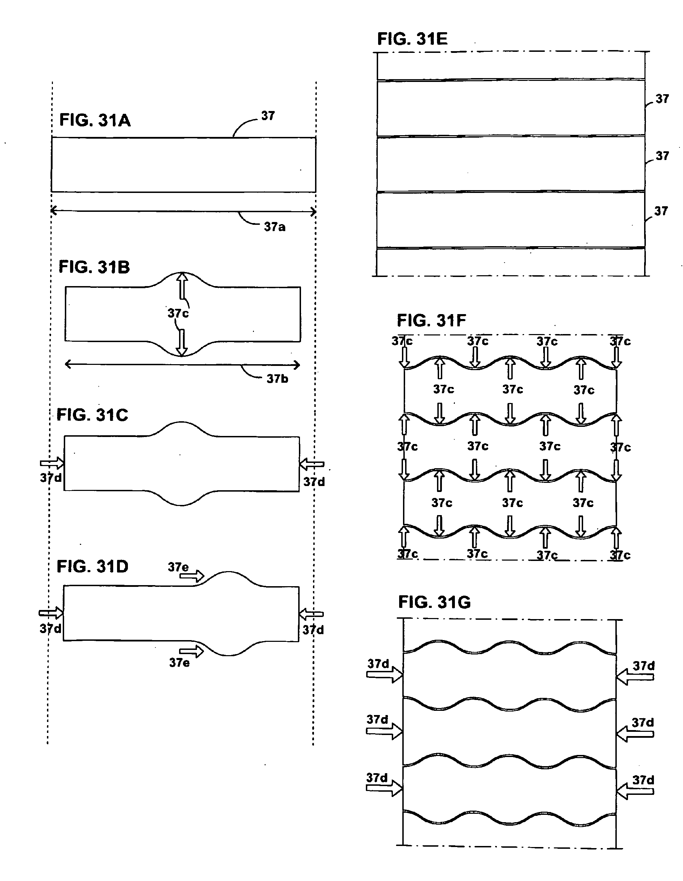

**FIGs. 31A-D** illustrate how wave undulations may be formed in a circular tube in one implementation;
**FIGs. 31 E-G** illustrates how a plurality of circular tubes may be arranged adjacent to each other in one implementation;

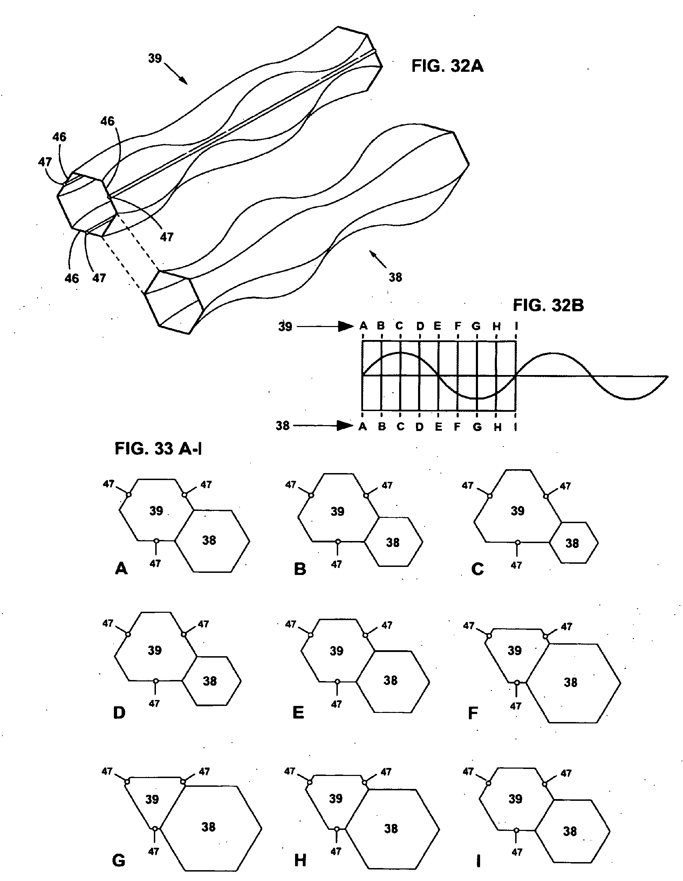

**FIG. 32A** illustrates two types of hexagonal tubes in one implementation;
**FIG. 32B** illustrates one cycle of operation in one implementation;
**FIG. 33A-I** illustrate a series of sections cut through the same point as FIG. 32A during one cycle of operation of a hexagonal honeycomb implementation;
**FIGs: 34A-C** illustrate a series of sections cut through a hexagonal honeycomb at the same point during one half of a cycle of operation in one implementation;

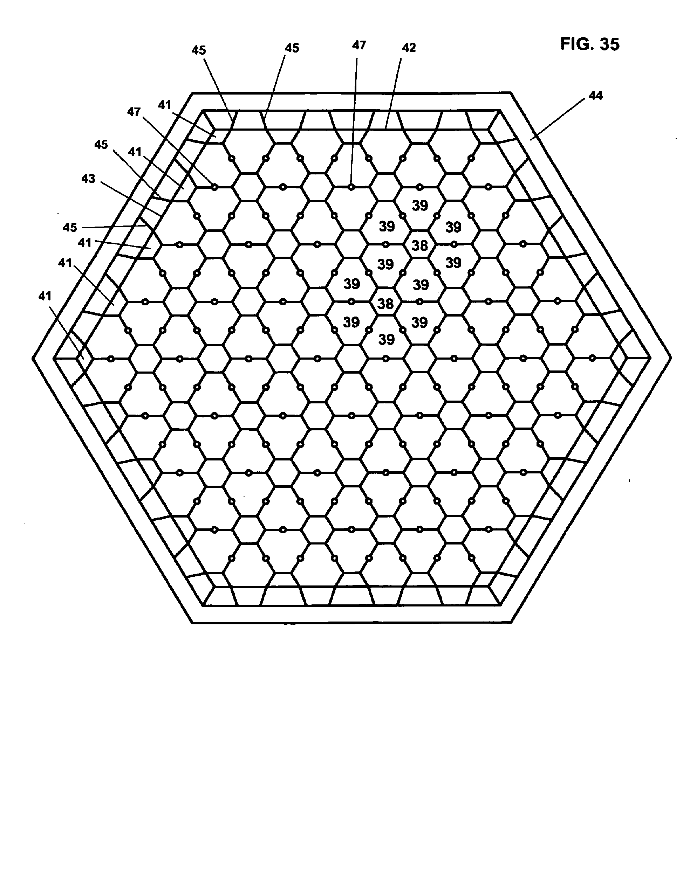

**FIG. 35** illustrates how a hexagonal honeycomb may be formed by a plurality of Type A hexagonal tubes and a plurality of Type B hexagonal tubes in one implementation;

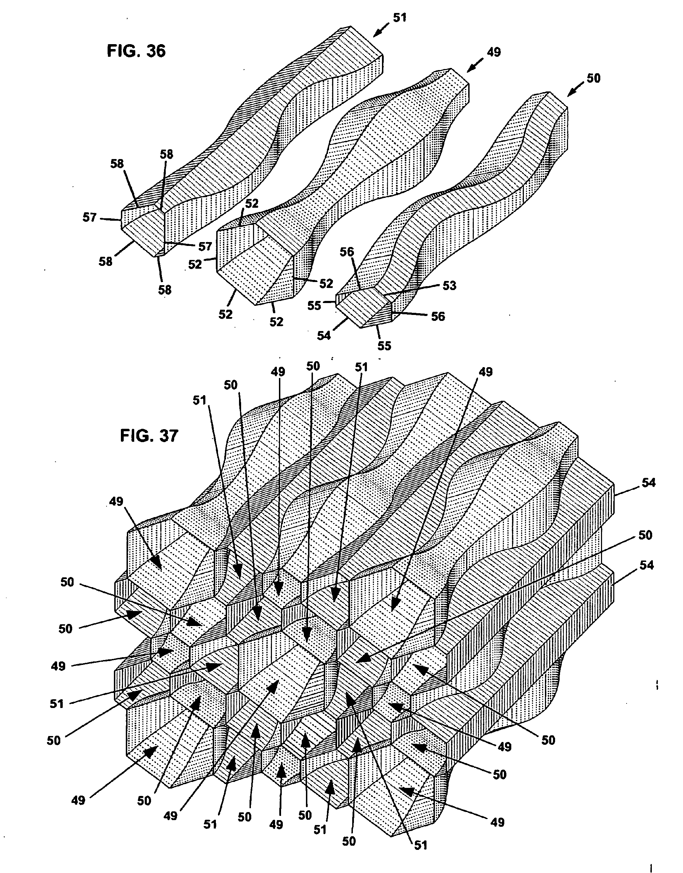

**FIG. 36** illustrates three types of hexagonal tubes for one hexagonal honeycomb implementation;
**FIG. 37** illustrates how a hexagonal honeycomb implementation may be formed by a plurality of Type C hexagonal tubes, a plurality of Type D hexagonal tubes and a plurality of Type E hexagonal tubes;

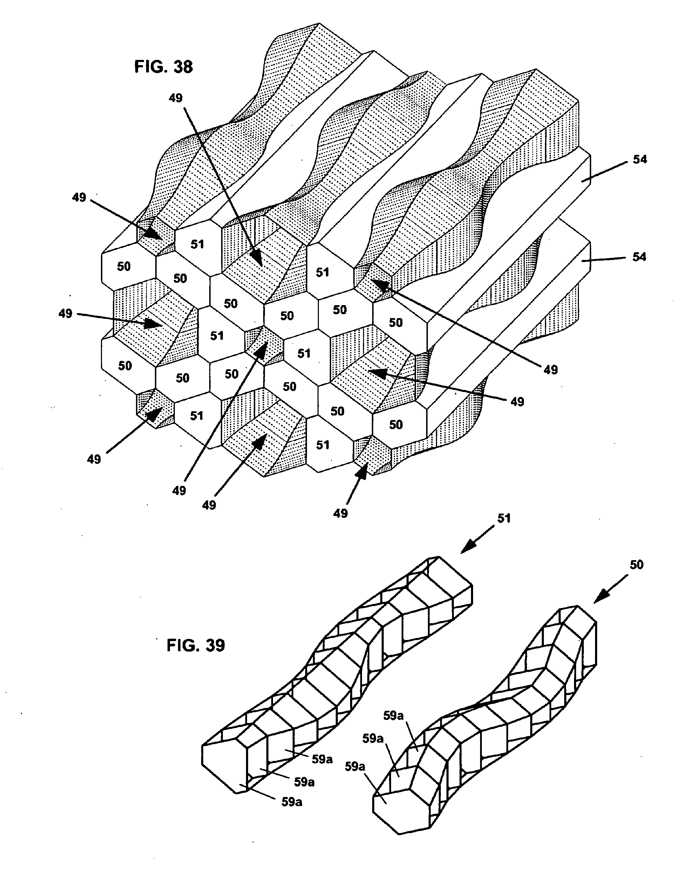

**FIGs. 38-39** illustrate a hexagonal honeycomb where the Type D and Type E tubes are closed by a series of elastic plates in an implementation;

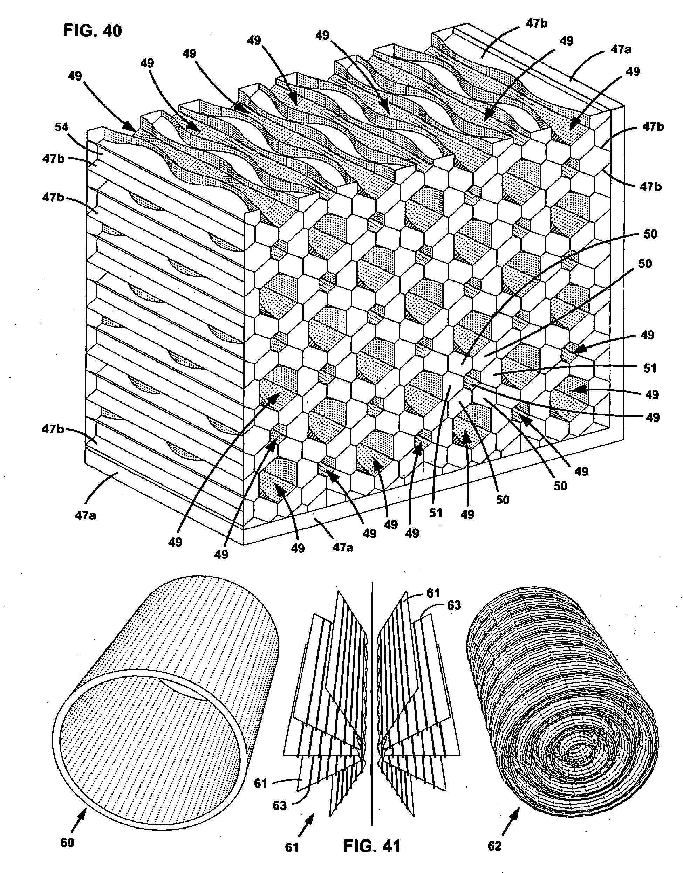

**FIG. 40** illustrates how a hexagonal honeycomb may be connected at its perimeter to a rigid frame or tube in an implementation;
**FIG. 41** illustrates concentric circular tubes and their corresponding deformation-retaining components in one implementation;

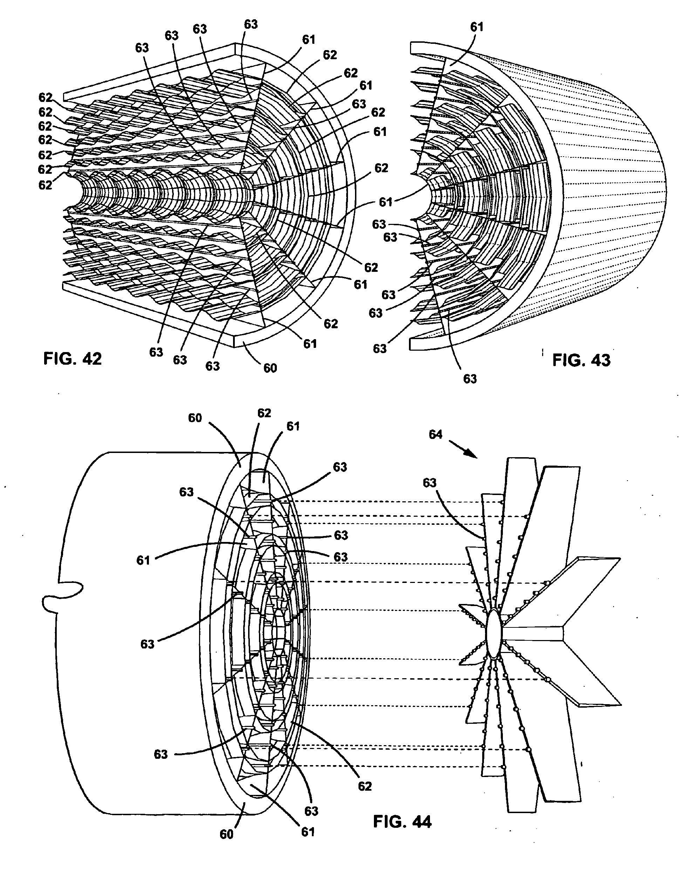

**FIGs. 42** and **43** illustrate a longitudinal section cut through concentric tubes in an implementation;
**FIG. 44** illustrates a way that the deformation-retaining components may restrain the concentric tubes and may be fixed to a secondary supporting frame in one implementation;

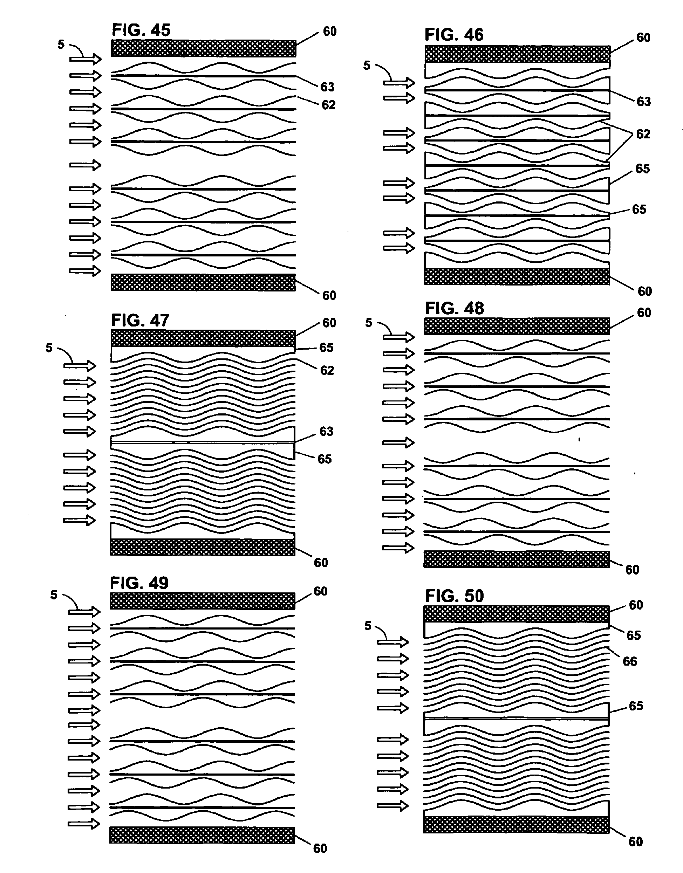

**FIGs. 45-50** illustrate longitudinal sections cut through the concentric tubes of several concentric ring implementations;

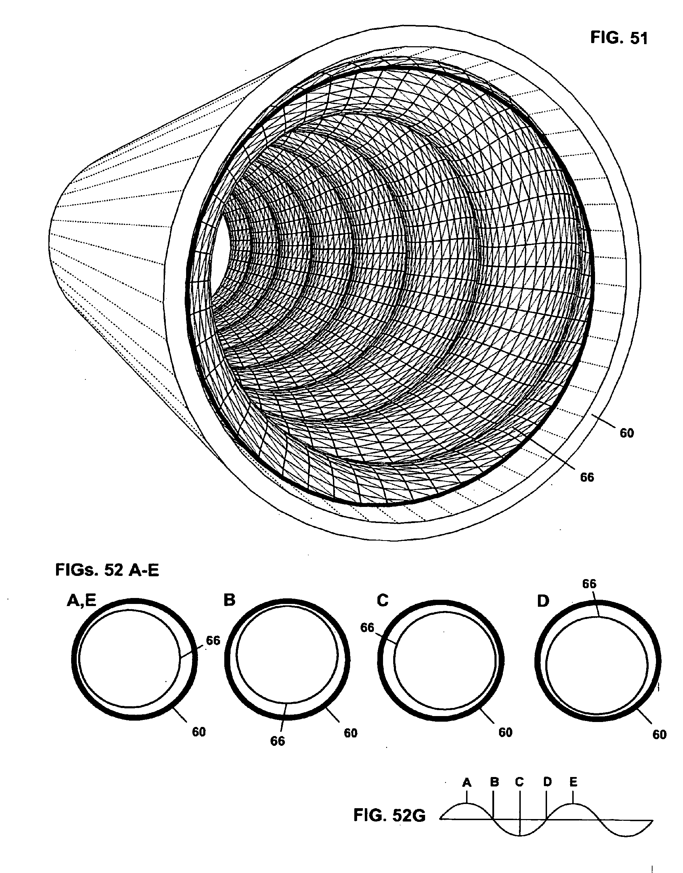

**FIG. 51** illustrates elements of a concentric spiral tube implementation in one embodiment;
**FIGs. 52A-E** schematically illustrate a series of section cuts showing the relative positions of a rigid tube enclosure and concentric spiral tube in a concentric ring embodiment;

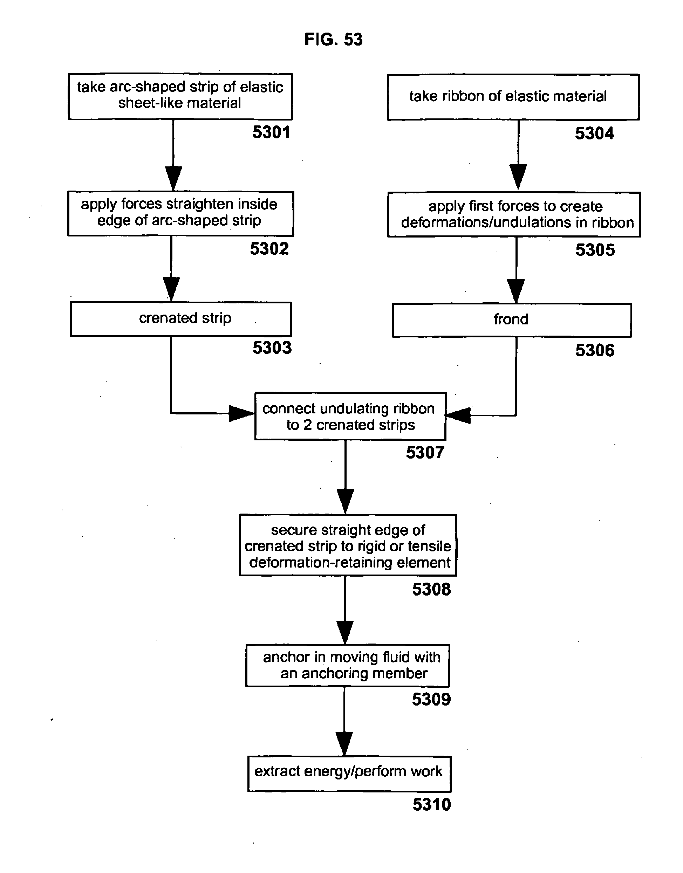

**FIG. 52G** indicates positions within the cycle of operation that the section cuts of **FIGs. 53A-E** were taken in one implementation; and
**FIG. 53** illustrates an implementation of logic flow for assembly of fronds mechanisms in one embodiment.

### DETAILED DESCRIPTION

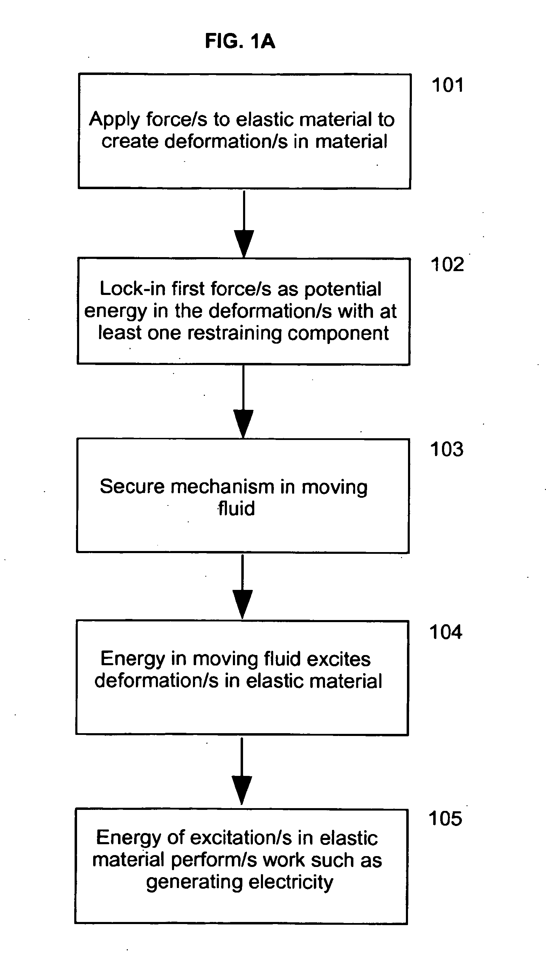

Compliant or "pliant" elements of the embodiments described herein may, in one implementation, be assembled with force-induced deformations in the form of planar perturbations analogous to degenerate energy states **FIG. 1A**. The mechanisms may be created by applying force to a flexible article comprised substantially of elastic material to create deformations in the material **101** into which these forces are locked-in as potential energy in the deformations **102.** The mechanisms may be anchored in moving fluid **103** whereupon the energy in the moving fluid excites the deformations in the elastic material **104.** The energy transferred from the moving fluid into excitations in the elastic material may be harnessed to generate electricity or perform work **105.**

Embodiments of pliant mechanisms provide undulating mechanisms for generating electricity from a moving stream of fluid in at least two ways, the first by utilizing materials that exhibit an electrical response to material strain, the second by mechanically coupling the undulating motions of the mechanisms to an electromagnetic generator or other output device. In the descriptions of embodiments herein, numerous specific details are provided, such as examples of components and/or mechanisms, to provide a thorough understanding of the embodiments. One skilled in the relevant art will recognize, however, that an embodiment can be practiced without one or more of the specific details, or with other apparatus, systems, assemblies, methods, components, materials, parts, and/or the like. In other instances, structures, materials, or operations are not specifically shown or described in detail to avoid obscuring aspects of the embodiments.

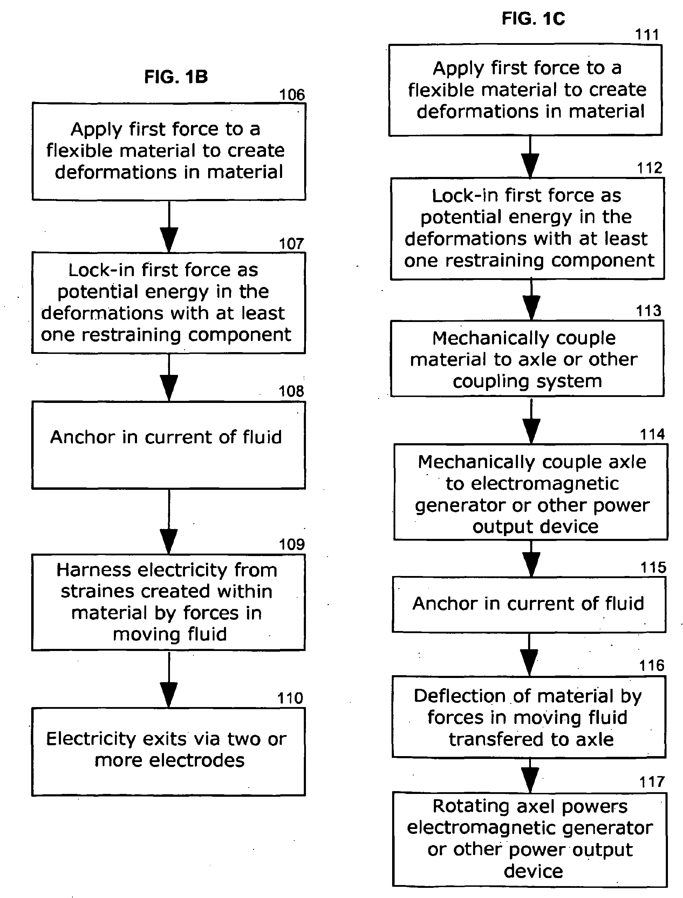

**FIG. 1B** is a diagram illustrating a method for the creation and operation of an embodiment of pliant mechanisms utilizing an elastic material which exhibits an electrical response to material strain: A first force is applied to a material to create deformations **106.** The first force is locked into the material as potential energy using at least one restraining component **107.** The mechanism is anchored or tethered in a current of fluid **108.** Strains in the material caused by the forces of the moving fluid generate electricity which is harnessed **109** and the electricity exits via two or more electrodes **110.**

**FIG. 1C** is a diagram illustrating a method for the creation and operation of an embodiment of pliant mechanisms utilizing the deflection of an elastic material to perform mechanical work which is then harnessed via an electromagnetic generator or other power output device: A first force is applied to a material to create deformations **111.** The first force is locked into the material as potential energy using at least one restraining component **112.** The material is mechanically coupled to an axle or other coupling system **113.** The axle is mechanically coupled to an electromagnetic generator or other power output device **114.** The mechanism is anchored or tethered in moving fluid **115.** Deflection of the flexible material by forces of the moving fluid are transferred to an axle **116.** Rotation of the axle powers an electromagnetic generator or other power output device **117.**

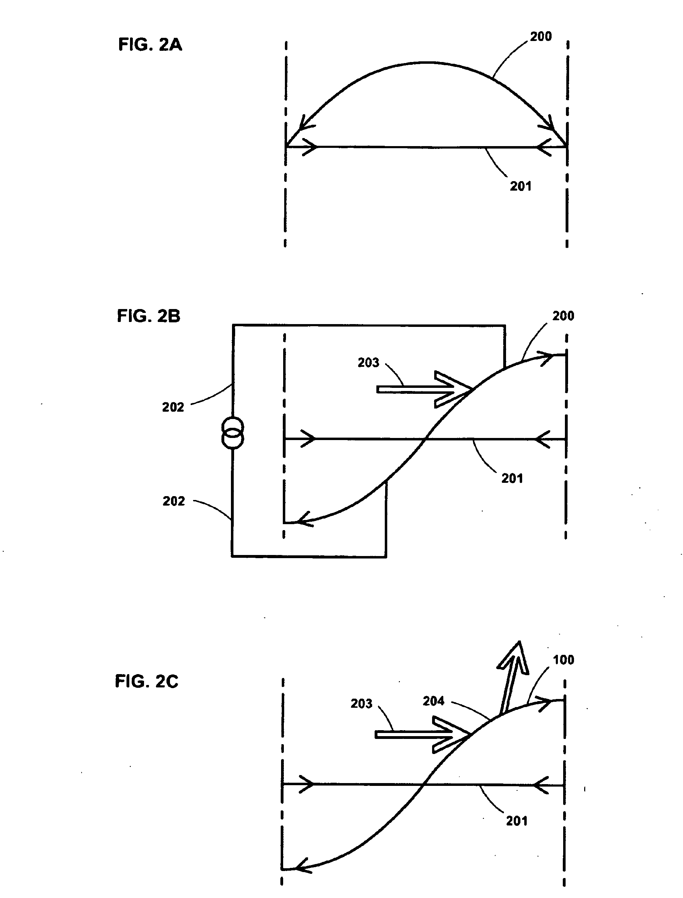

**FIG. 2A** is a diagrammatic representation of the internal energy states of a single deformation **200** in a single position within the material plus a deformation-retaining component **201.** The deformation **200** in the material is in overall compression, and the deformation-retaining component **201** is in tension. **FIG. 2B** is a diagrammatic representation showing an external force **203** exerted by a moving fluid upon said deformation **200** and the resulting change in position of said deformation **200,** and the retrieval of electricity generated by resulting strains in the material via two electrodes **202.** The principles illustrated in this diagram are common to many implementations of mechanisms described herein in which strains within the material are converted into electrical energy by utilizing an appropriate elastic or flexible material as described above.

**FIG. 2C** is a diagrammatic representation showing an external force **203** exerted by a moving fluid upon the deformation **200** in **FIG. 2A** and the resulting change in position of said deformation **200,** causing deflection of the material **204** which can be mechanically coupled to an electromagnetic generator or other output device. The principles illustrated in this diagram are common to many implementations of the mechanisms described herein in which deflection of the material is converted into mechanical energy, and is mechanically coupled to an electromagnetic generator or other output device.

As has been mentioned in the Summary above, fronds are an element common to components in a first group of embodiments which are categorized according to their visual appearance as viewed from a section-cut plane perpendicular to the direction of moving fluid. This first group is described for convenience and illustrative purpose as including a parallel array, an asterisk, a polygonal ring, a dodecagonal honeycomb and an octagonal honeycomb. Other orientations, arrangements, combinations, configurations, and/or the like of frond structures may be realized depending on the particular needs and or requirements of an implementation.

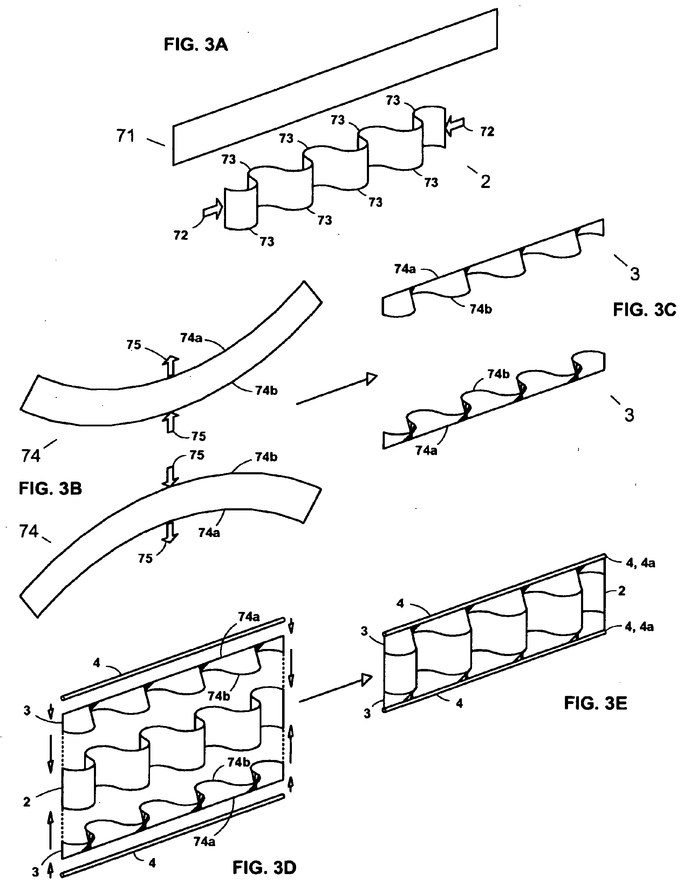

**FIG. 3A** illustrates how a frond 2 is formed, in accordance with some embodiments of this first group of mechanisms. The frond **2** is formed by pre-stressing a ribbon **71** of a flexible or elastic material. As described above, the flexible material can be any material or composite of material that exhibits an electrical response to mechanical strain. In an un-stressed state, the ribbon **71** is straight. When a force **72** is applied in a direction parallel to a longitudinal axis of the material, one or more wave undulations **73** occur within the material, and cause the ribbon **71** to take a form of an undulating ribbon. When no additional force is acting upon the frond **2,** it maintains a motion-less sine-wave profile along its longitudinal axis.

The regularity of the wave undulations **73** can be set by a guiding mechanism to ensure that the applied force **72** causes deformation to occur in the desired periodic manner. As long as the frond **2** is restrained by a deformation-retaining component from returning to its unstressed state, the potential energy of the applied force **72** remains in the frond **2,** and therefore, the presence of wave undulations **73** remain.

Along both edges of the frond **2** are elastic strips that take the form of geometrically hyperbolic planes, more commonly described as "scalloped" or "crenated" **3.** The edge of a crenated strip **3** that is connected to the frond **2** is formed so as to follow the undulating profile of the frond **2** along the undulating line of attachment, creating a transition between the wavy edge of the frond and the straight line of attachment to a deformation-retaining component **4.** **FIGs**. **3B-E** illustrates an implementation of a method for making crenated strips **3** and adjoining them to a frond **2.** Two arch-shaped strips **74** of the elastic material are formed or cut from a flat sheet, multi-layered, woven, or other composite sheet of the material **FIG. 3B****.** The geometry of each strip **74** has an inner edge **74a** and an outer edge **74b** formed by two arcs with a common center, such that the outer edge **74b** has a greater radius and a proportionally greater arc length than the inner edge **74a.** A force **75** is applied to the first strip **74** until the inner edge **74a** forms a straight line. In such a case, the inner edge **74a** is in tension and the outer edge **74b** is in overall compression **FIG. 3C****.** Since the outer edge **74b** has a greater length than the inner edge **74a**, as indicated by its greater arc length prior to the application of the force **75,** the outer edge **74b** becomes deformed into one or more wave undulations. The number of wave undulations and the regularity of wave undulations can be controlled by a guiding mechanism. The crenated strip **3** has a tendency to return to its unstressed state but maintains the applied force **75** as potential energy as long as the crenated strip is restrained from returning to its unstressed state. The two undulating edges of the frond **2** are fixed to the undulating edges **74b** of the crenated strips **3,** **FIG. 3D****.**

The energy state of the frond **2** and the two crenated strips **3** is in equilibrium, as the internal energy of the first crenated strip **3** causes the first strip to "want" to straighten-out in one direction, but the internal energy state of the second crenated strip **3** causes this second strip to "want" to straighten-out in the opposite direction. The tension within the inner edges **74a** of the flexible crenated strips **3** therefore prevent the frond **2** from straightening-out. Thus the crenated strip **3** also serves as the first deformation-retaining component. While the positions of the wave undulations in the crenated strips **3** and the frond **2** may move under the force of flowing fluid in the direction of the flowing fluid, the crenated strips **3** and the frond **2** remain synchronized with one another. Waves that are moved off the end of the frond **2** must re-appear at the start of the frond **2** because the potential energy in the mechanism, expressed as stressed undulations in the material, has not been removed.

In some implementations, the inner edges **74a** of the crenated strips **3** may be reinforced with a tensile or rigid deformation-retaining component **4,** such as a cable or rigid tube **FIG. 3D****.** In some implementations, each frond and/or crenated strip **2** is electrically coupled to at least one electrode, so as to retrieve electricity generated by strains within the materials of the frond **2** and crenated strips **3.** Wiring **4a** associated with the retrieval of harnessed electricity from the electrodes may run along or within the reinforcing deformation-retaining component **4** of the crenated strips **3.** **FIG. 3E** illustrates a perspective view of an assembly and arrangement of a frond **2,** two crenated strips **3** and two tensile or rigid reinforcing deformation-retaining components **4.**

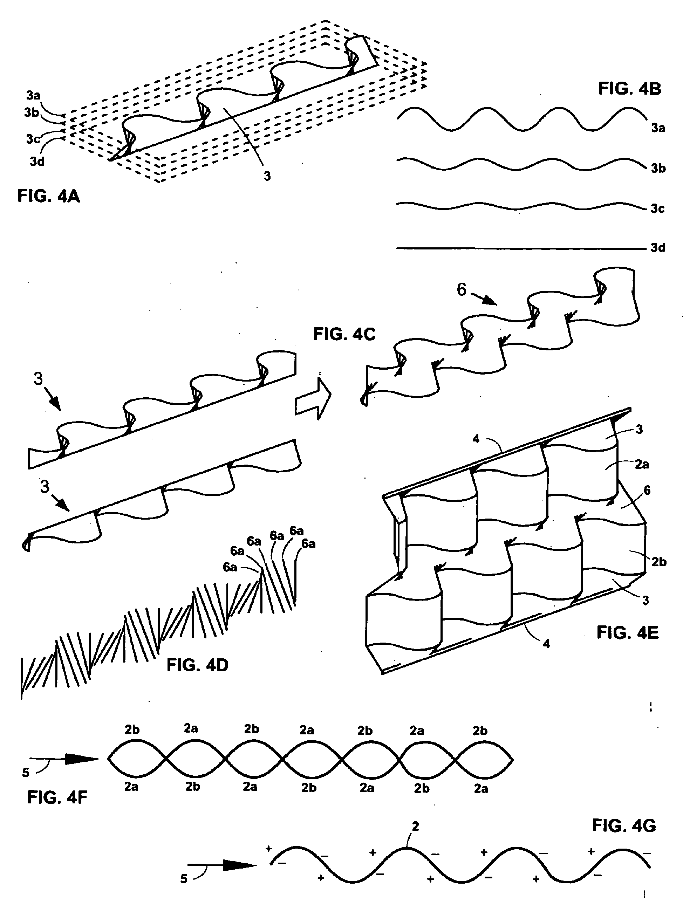

**FIGs. 4A-B** illustrate the morphology of the crenated strip **3,** in accordance with one embodiment. A series of sections **3a, 3b**, **3c**, and **3d** cut through the crenated strip **3** shows that the wave undulations of the crenated strip **3** decrease further away from the outer edge **74b,** and are eliminated altogether at the inner edge **74a.**

**FIG. 4C** illustrates how the first strip and the second strip are attached together to form a double flexible or elastic crenated strip **6,** in accordance with one embodiment. The inner edge **74a** of the second crenated strip **3** is attached to the inner edge **74a** of the first crenated strip **3,** as shown. The potential energy in the first crenated strip **3** "wants" to straighten-out the first crenated strip 3 in one direction and the potential energy in the second crenated strip **3** "wants" to straighten-out the second crenated strip **3** in the opposite direction. Therefore, the two attached crenated strips form a double crenated strip 6 that is in energy equilibrium.

**FIG. 4E** illustrates how the double crenated strip **6** is used to attach adjacent fronds **2,** in accordance with one embodiment. The double crenated strip **6** is mechanically coupled with a frond **2a** above it and another frond **2b** below it. Wave undulations of a frond are out-of-phase with wave undulations of adjacent fronds. A plurality of fronds may be connected one above another longitudinally via double crenated strips **6.**

**FIG. 4D** illustrates how wave undulations between the two edges of the double crenated strip **6** are synchronized and in opposite phase to each other, in accordance with one embodiment. The synchronicity of wave undulations between the two edges of the double crenated strip **6** may be further ensured by the insertion of rows of narrow, straight, rigid members **6a** inserted within or on the surface of the crenated strips **6** and effectively combining the crenated strips into one operational unit. As the wave undulations pass along the double crenated strip **6,** these rigid members **6a** rotate partially about a central axis of the double crenated strip **6.** The synchronicity of the two edges of the double crenated strip **6** ensures the synchronicity of the fronds **2a** and **2b**.

**FIG. 4F** illustrates a schematic view of the wave undulations of the fronds **2a** and **2b** with respect to a direction **5** of the flow of the fluid. When anchored in the flowing fluid, higher fluid pressures result on faces of wave undulations that obliquely face upstream and lower fluid pressures result on faces of wave undulations that obliquely face downstream. **FIG. 4G** illustrates a pressure differential across the wave undulations of two connected fronds **2,** in accordance with one embodiment. This pressure differential causes the wave undulations to travel down along the fronds **2a** and **2b** in the direction **5** of the flow.

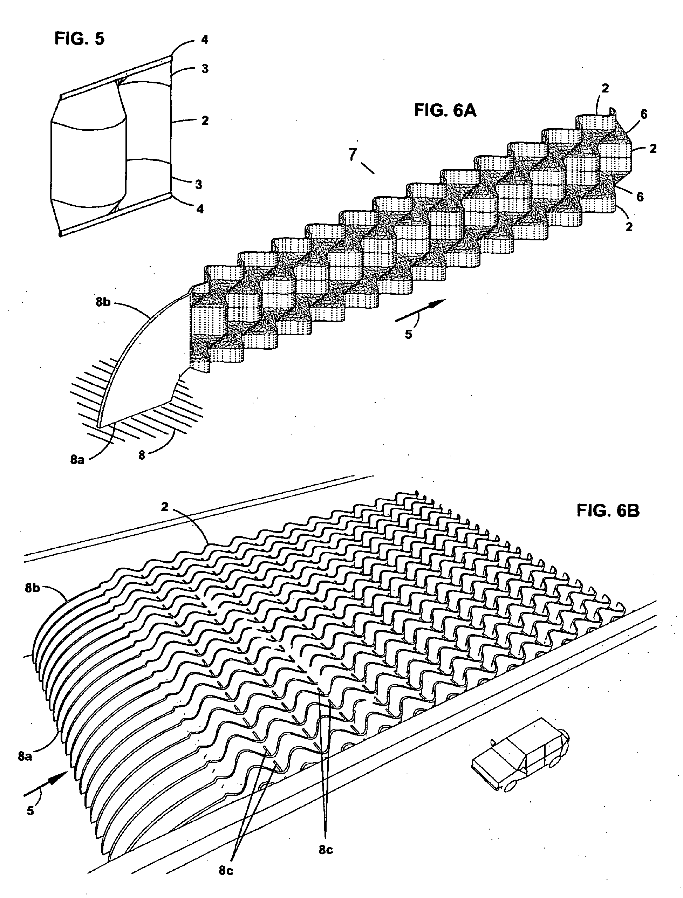

**FIG. 5** illustrates a frond **2** with a minimum number of wave undulations per frond **2** in one implementation, one to each side of the longitudinal central axis of the frond **2.** As the fluid pressure moves the first wave in the direction **5** of the flow, a new wave begins to form upstream from the first wave, while at the same time the second wave begins to move off the end of the frond **2.** The maximum number of wave undulations per frond **2** depends on the physical strength of the materials used to form fronds **2** and crenated strips **3** and double crenated strips **6.**

As mentioned above in the summary, the sequence of wave undulations in a given length of frond **2** is prevented from summing together into fewer or a single larger undulation. When viewing **FIG. 3A** one may visualize how the undulations **73** created by the applied force **72** would tend to converge into a single bulge. **FIG. 3E** shows how each undulation is restrained from converging with one another, by restraining the frond **2** between two crenated strips **3** and reinforcing material **4.** The straight edged side of the crenated strips **3** forms a line that passes through an axis which is the midpoint of the wave cycle, which is to say that this edge forms a straight line across which the waves extend either side to equal amplitudes. Configured in this manner, one wave will not merge with another because to do so would require the wave to "leap" over the barrier of the maximum amplitude of the wave immediately adjacent to it.

As the wave undulations move along the fronds **2** in the direction of the moving fluid, stresses move along the fronds **2** in the direction of moving fluid, and electrical energy is generated from these stresses created in the material.

A plurality of fronds and deformation-retaining components are arranged in a prescribed pattern selected from the first group, said pattern being visible when viewed in a section-cut plane perpendicular to the direction of moving fluid. The pattern group may include a wide variety of different arrangements of fronds and/or frond tubes, such as but not limited to an array, an asterisk, a polygonal ring, a dodecagonal honeycomb and an octagonal honeycomb.

In accordance with one embodiment, at least two fronds **2** are mechanically coupled to each other along a common longitudinal edge to form a frond line **7.** **FIG. 6A** illustrates a frond line **7** formed by three fronds **2** and two double crenated strips **6.** Many other frond line configurations are possible in various embodiments and implementations of pliant mechanisms. In one implementation, wave undulations of each frond **2** may be out-of-phase with wave undulations of adjacent fronds **2** in the same frond line.

The fronds **2** can be anchored in various ways to the floor **8** of the fluid channel, the sides of the fluid channel, to a structure spanning across the fluid channel, or through anchors **8a** attached to vertical component **8b.** The vertical components **8b** can be formed in various designs so as to improve the hydrodynamics of the anchors **8a** and the anchor's point of attachment to the frond, and therefore, how the fluid interacts with the fronds.

**FIG. 6B** illustrates an array of a plurality of frond lines 7, in accordance with one embodiment. The frond lines are arranged parallel to each other, within the fluid channel, such that the frond lines undulate in unison. This creates greater fluid pressure by restricting the available paths through which the fluid can travel, and therefore creates stronger forces acting upon the frond undulations. The fronds **2** of one frond line **7** may be fixed to fronds of another frond line **7** with lateral adjoining members **8c** so that the undulations of adjacent frond lines remain synchronized.

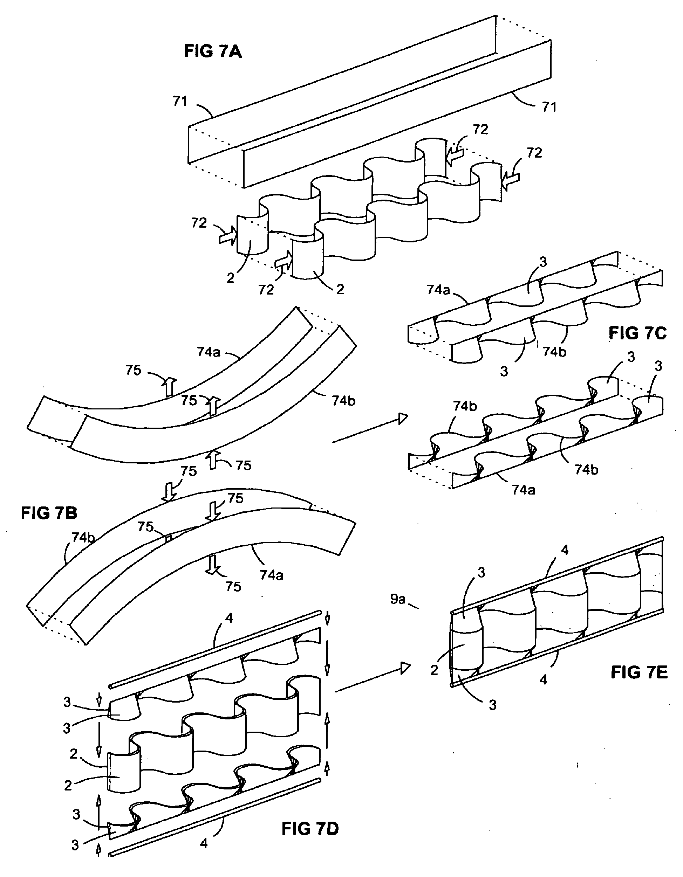

In several implementations, the flexible ribbon, or frond, **2** may be configured as a double-layer, with the respective layers being connected to each other longitudinally but with interstitial space **2a** in between the two layers. In these double-layered frond **9a** implementations, the fronds **2** may be connected to each other indirectly via crenated strips **3** to a restraining components **4,** or may be connected to each other directly via intermediate flexible connections **4a**, which in turn connect to a crenated strip **3,** which in turn is connected to a restraining components **4.** **FIGs. 7A-E** show how a double-layered frond may be formed and connected via crenated strips **3** to the first restraining component **4,**

In double-layered frond implementations where the fronds **2** are connected to each other via two crenated strips **3** to a restraining components **4,** the two crenated strips **3** may be separated from each other in a manner that matches the separation of the fronds **2** and therefore make contact with each other as the two fronds **2** make contact, and separate as the two fronds **2** separate, being fixed to the two fronds **2** along their undulating longitudinal edges. Along their other, non-undulating edges the crenated strips **3** make contact with one another at their place of contact with the first restraining component **4,** or come close together so that the interstitial space between the crenated strips **3** is narrowest along their straight edges.

In some implementations, structures such as those illustrated in **FIGs.7A-E** may be employed to transport fluids. An interstitial space between the two ribbons may host a fluid for transporting. The undulations built into the ribbons cause the respective layers of the double-layered ribbon to be closer together or further apart in a periodic manner that corresponds with the positions of the undulations, creating pockets along the interstitial space. As the undulations move along the length of the double ribbon under the forces of a moving fluid, the pockets of interstitial space move with them, transporting the fluid contained therein as they move.

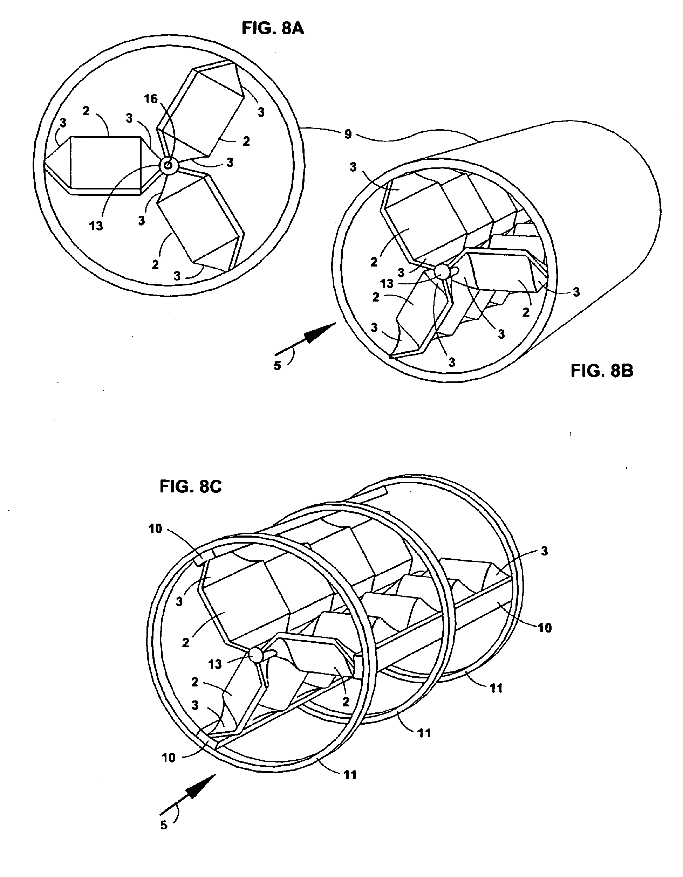

**FIGs. 8A-C** illustrate an "asterisk" implementation formed by a plurality of fronds **2** and deformation-retaining components. With reference to **FIGs. 8A-C,** the asterisk is formed of three fronds **2.** It should be noted here that further variations of the asterisk are possible with more or less than the three fronds **2** shown, and that such variations are intended to be included as "asterisk" implementations.

Each of three fronds **2** are connected to two crenated strips **3,** one crenated strip being attached to either edge of each frond **2.** The inner crenated strip **3** of each frond is mechanically coupled to a second deformation-retaining component **13** comprised of a hollow tube, and this component prevents the fronds from straightening-out to their pre-stressed state. The outer crenated strip **3** of each frond is mechanically coupled to third deformation-retaining component, and this third deformation-retaining component also prevents the fronds from straightening-out to their pre-stressed states. This third deformation-retaining component may, for example, be a tube **9** surrounding the fronds **2,** or for example, rigid members **10** attached to radial rings **11.**

The wave undulations of the fronds **2** are in-phase with each other so that the second and third fronds are duplicates of the first frond rotated twice about the central axis of he mechanism, which each rotation being 120 degrees, in the example shown here incorporating three fronds. As the wave undulations move along the fronds **2** in the direction of the moving fluid, stresses move along the fronds **2** in the direction of moving fluid, and electrical energy is generated from these strains in the material.

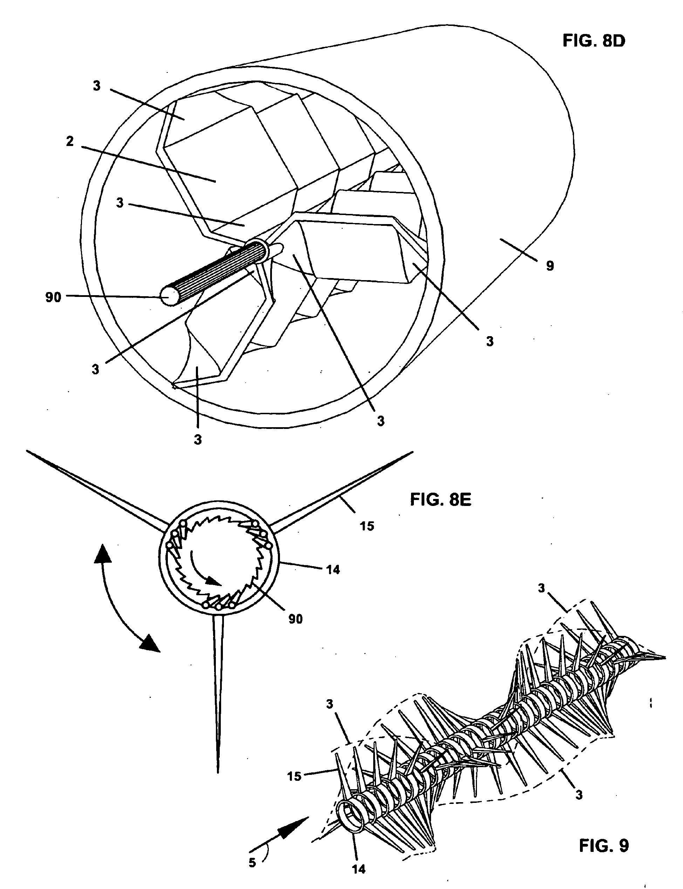

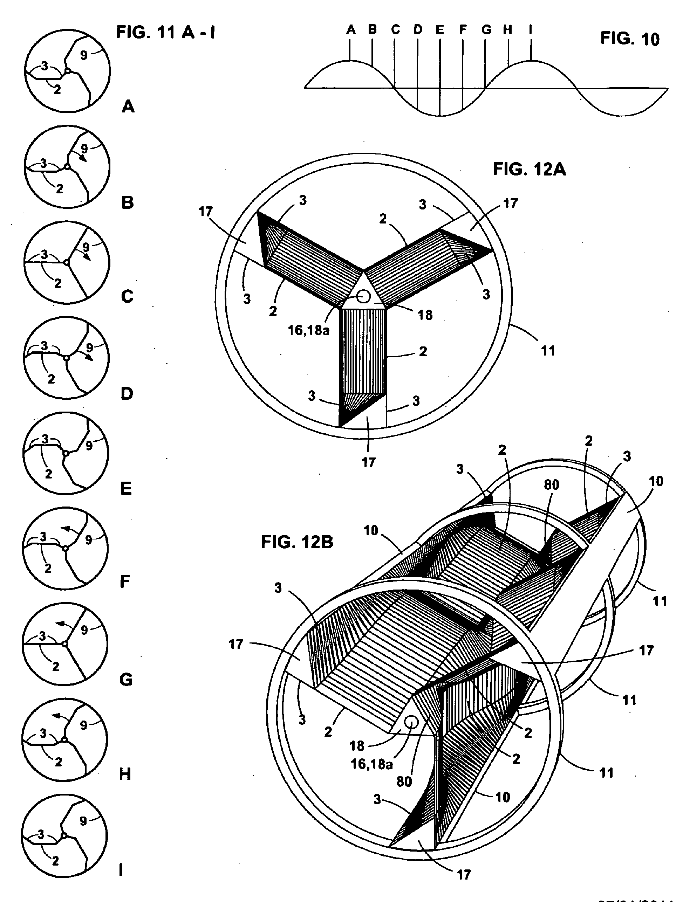

**FIG. 8D** illustrates an implementation with aspects of the implementation above and illustrated in **FIGs. 8A-C,** with an additional component being a central ratcheted axle **90.** The fronds 2 are mechanically coupled via the crenated strips **3** to the axle **90** by a ratchet system so that the clockwise and counter-clockwise rotation of the fronds **2** and connected crenated strips **3** as illustrated in **FIGs. 11A-I,** causes the axle **90** to rotate in one direction, such as for mechanically powering an electromagnetic generator or other output device.

**FIG. 8E** illustrates aspects of a detail of an axle **90** and ratchet system, whereby forces received on the fronds **2** from moving fluid, and transferred to the inner crenated strips 3, are transferred to rigid projections **15** which are embedded into the inner crenated strips 3, and transferred to rigid rings **14,** causing the rigid rings to rotate clockwise and counter-clockwise. The rigid rings engage the axle **90** when rotating in one direction, and disengage from the axle **90** when rotating in the other direction, ensuring that the axle rotates continuously in only one direction. Other mechanisms may also be employed that will allow the rigid rings **14** to perform work on both their clockwise and counter-clockwise cycles. A variety of mechanisms may be utilized for achieving such desired rotation of the axle **90.** In embodiments containing an axle **90,** the axle **90** may also serve as an additional deformation-retaining component.

**FIG. 9** illustrates internal details of the arrangement relative to each other, of the rigid rings **14** and rigid projections **15** of the ratcheted asterisk implementation above, as illustrate in **FIGs. 8D-E.** **FIG.9** also illustrates equally well, stiffening mechanisms for incorporation into the non-ratcheted asterisk embodiment as shown in **FIG. 8A-C.** Coupled to the inside of the hollow tube **13** is a plurality of rigid rings **14** running along the length of the tube **13.** Each ring **14** has three rigid projections **15** radiating out from the centre at an angle of 120 degrees from each other. Each projection **15** is embedded into one of the three fronds **2** via the inner crenated strip **3** of each frond **2.** The rigid projections **15** attached to the rigid rings **14** maintain the position of the fronds **12** relative to each other, as the wave undulations travel down the fronds in the direction **5** of the flowing fluid. This, in turn, causes the rings **14** and rigid projections **15** to rotate clockwise and counter clockwise. The hollow tube **13** in this implementation is made of a flexible or elastic material which allows the tube **13** to rotate partially clockwise and counter-clockwise, but which does not allow the tube to lengthen. Wiring **16** associated with the retrieval of harnessed electricity may pass through the aforementioned flexible tube **13** as shown in **FIG. 8A****.**

**FIG. 10** references points of section cuts shown in **FIGs. 11A-I** during one cycle of operation of an asterisk implementation. A cycle of operation may, in some implementations, refer to the travel of a single wave from outset through transition to its original position. **FIGs. 11 A-I** illustrate a series of sections cut through the asterisk at a given position, during one cycle of operation. Fluid flowing through the tube **9** forces the wave undulation of a given frond **2** to move in the direction of the moving fluid. This causes the rigid rings **14** to rotate. This rotation is reinforced by the fluid pressure on the other two fronds **2,** causing the wave undulations of all three fronds **2** to travel in synchronization.

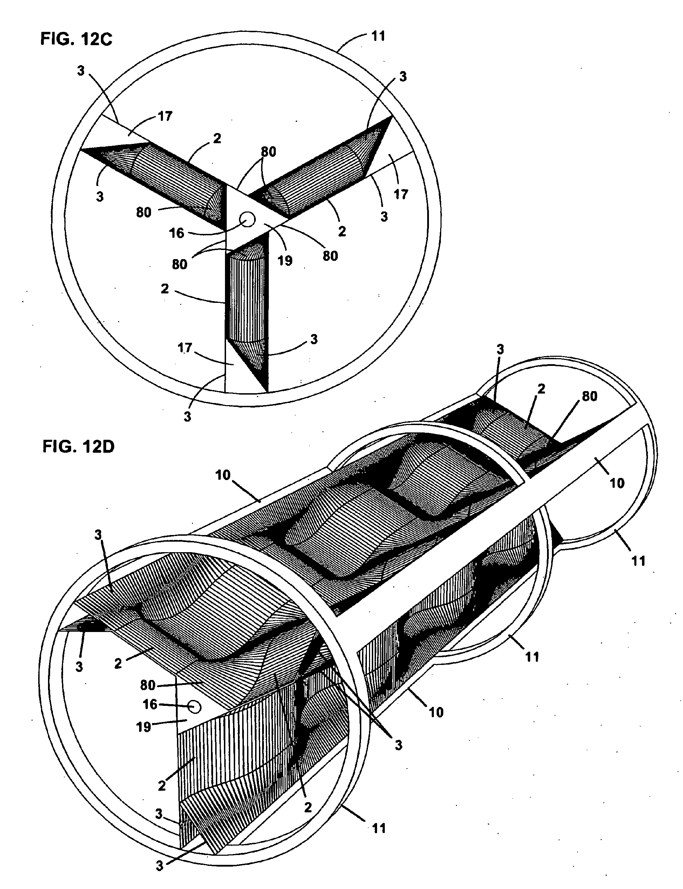

**FIGs. 12A-B** illustrate an alternative mechanical coupling of the fronds **2** in the asterisk configuration. The mechanical couplings of the outer longitudinal edges of the fronds **2** to the second deformation-retaining component form V-shaped cross-sections, whose both halves are comprised of flexible crenated strips **3.** The V-shaped cross-sections can be open allowing the passage of fluid through, or closed, as shown in the figure, with a plurality of elastic plates **17** stacked along a longitudinal axis, with planes parallel to each other.

The inner edges of the three fronds **2** are not coupled to crenated strips **3** along their longitudinal edges but to each other via flexible bands **80.** This mechanical coupling of the inner longitudinal edges of the fronds **2** forms a triangular cross-section, whose sides are comprised of three flexible bands **80.** The polygonal cross-section can be closed by a plurality of elastic plates **18,** stacked along the longitudinal axis, with planes parallel to each other and each plate connecting at its corners to the three fronds **2.** As the waves move down the fronds **2,** the polygonal cross-section and the elastic plates **18** rotate clockwise and counterclockwise about the longitudinal axis. The elastic plates **18** expand and contract in area with clockwise and counter-clockwise rotation. A small flexible tube passes through the elastic plates **18a** along the longitudinal axis and is coupled to these elastic plates **18a**. This tube is made of a material which allows the tube to twist clockwise and counter-clockwise but does not allow the tubes to lengthen, acting as a fourth deformation-retaining component. Wiring **16** associated with the retrieval of harnessed electricity passes through this tube.

**FIGs. 12C-D** illustrate the use of rigid plates **19,** instead of the elastic plates **18,** in accordance with another implementation. The polygonal cross-section can be closed by a plurality of rigid plates **19** stacked along the longitudinal axis. The size of the polygonal cross-section remains constant throughout the cycle of operation. A small flexible tube passes through the rigid plates **19** along the longitudinal axis. This tube is made of a material which allows the tube to twist clockwise and counter-clockwise with the rotation of the rigid plates **19.** Wiring **16** associated with the retrieval of harnessed electricity passes through this tube. In one implementation, the polygonal cross-section and the rigid plates **19** rotate 60 degrees clockwise and 60 degrees counter-clockwise in **FIGs. 12C-D.** In alternative implementations, other degrees of rotation may be achieved depending on particular design factors of the implementation, such as the relative amplitudes of frond oscillations, rotational constraints, and/or the like.

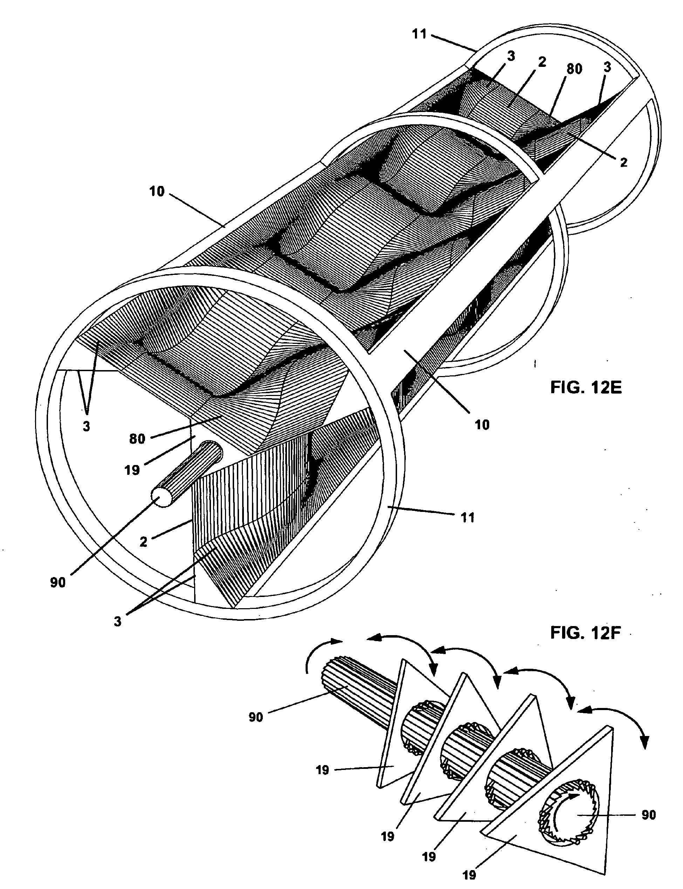

**FIG. 12E** illustrates another implementation with a central axle **90** passing through the plurality of rigid plates **19** and mechanically coupled to the rigid plates **19** through a ratchet system, so that the rotation of the rigid the plates **19** as described above clockwise and counter-clockwise, rotates the axle **90** in one direction but not the other, thus mechanically powering an electromagnetic generator or other output device.

**FIG. 12F** illustrates one possible mechanism for achieving the one-directional rotation of the axle from rigid plates **19** that rotate clockwise and counter-clockwise. A wide variety of other mechanisms that allow the rigid plates **19** to perform work on both their clockwise and counter-clockwise cycles, such as by effectuating rotation of the axle, may be employed within different implementations and/or embodiments of the pliant mechanisms described herein. In embodiments containing an axle **90,** the axle **90** may serves as a deformation-retaining component.

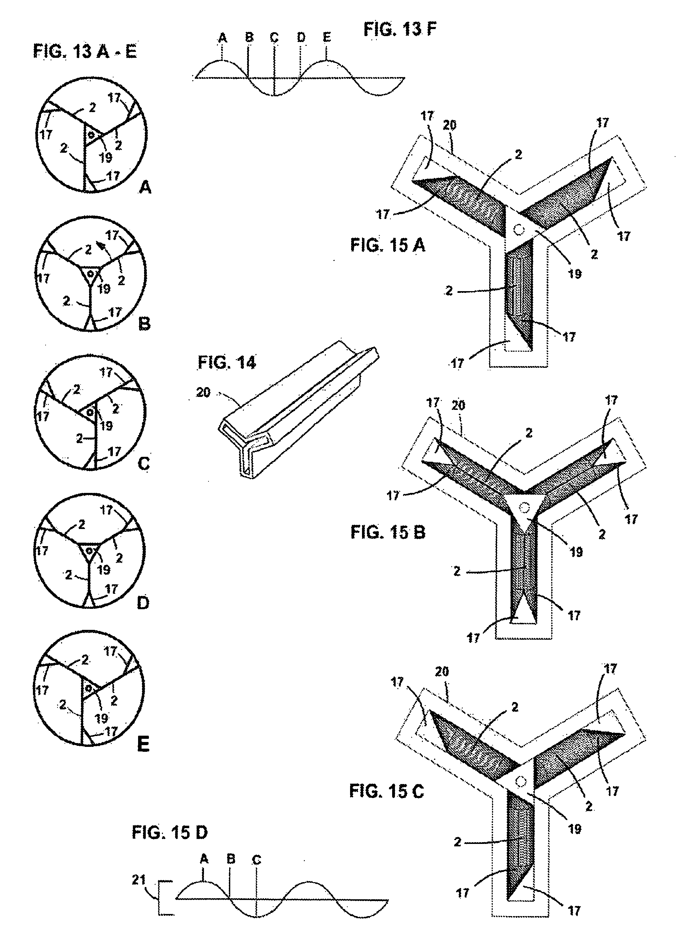

**FIGs. 13A-E** illustrate a series of sections cut through an asterisk implementation as described above, at a given position during one cycle of operation, while **FIG. 13F** illustrates the corresponding positions within a cycle of operation.

**FIG. 14** and **FIGs. 15A-D** illustrate an asterisk implementation encased in a rigid tube **20** that takes the form of the extruded profile of the asterisk. Flowing fluid is channeled through a restricted space enclosed on all sides by the rigid tube **20.** The inner dimensions of this rigid tube **20** can, in one implementation, be set by wave amplitude **21** of the three fronds **2,** as shown in **FIG. 15D****.** Dimensioned in this way, the rigid tube **20** restricts the passage of fluid so that a minimum amount of fluid is able to bypass the fronds **2** without exerting a force upon them. **FIGs. 15A-C** show three sections cut through the asterisk at the same position during one half of a cycle of operation.

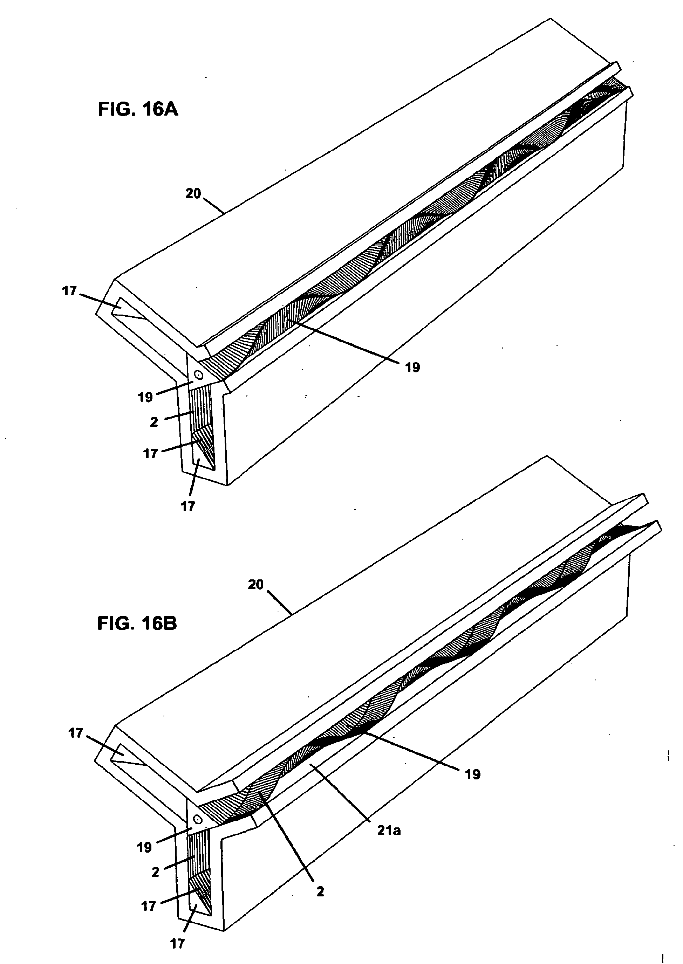

**FIGs. 16A-B** illustrate a series of moving pockets formed inside the rigid tube **20.** Fluid entering the rigid tube **20** is enclosed in the series of moving pockets. Consequently, the pressure on each wave undulation of a frond **2** is transferred to the next downstream wave undulation through the incompressible fluid in a pocket **21a** between the alternating wave undulations. In an application where the asterisk is subject to very high fluid pressures, the fronds **2** can have very large number of wave undulations.

An asterisk implementation as illustrated in **FIGs. 14-16B** may be employed for a non-free-flow application in which energy is extracted via different water pressures above and below a dam or other obstruction, with the asterisk implementation being a conduit between the above-dam waterway and the below-dam waterway. Such a dammed application may be much less destructive to fish and other aquatic animals than a conventional hydro-turbine. For example, depending on the speed of water flow through the mechanism, fish migration upstream is still possible, in principle, thus overcoming one of the negative environmental impacts of traditional hydro-electric installations.

In some implementations, asterisk-like structures similar to those described above may be configured to transport fluids. For example, in one implementation, an asymmetric frond **300,** as illustrated in one implementation in Fig. 17A, may be utilized, being comprised of a frond ribbon **2** fixed to a crenated **3** strip along one longitudinal edge, and a flexible band, or connecting strip **80** along the other longitudinal edge. At least three asymmetric fronds **300,** may be attached to one another along the respective longitudinal edges of each other's connecting strips **80,** so that the connecting strips **80** of the three asymmetric fronds **300** take the form of a triangle in cross section **FIGs. 17B-C,** where three asymmetric fronds **300** are utilized. The three asymmetric fronds **300** plus three deformation retaining (or restraining) components **4** together comprise an asymmetric frond unit **301.** The three asymmetric fronds **300** share a common axis which runs substantially parallel to the direction of flowing water **5.** When the asymmetric frond unit **301** is secured in place in that flowing water **5** so as not to be carried away in the current, the positions of the undulations within the frond ribbons **2** travel down along the lengths of the frond ribbons **2,** as described previously above.

The asymmetric frond unit **301** may be configured in one implementation so that each of its asymmetric fronds **300** has the same number of wave undulations of equal amplitude. In addition, under operation the relative wave positions of one asymmetric frond **300** may be in-phase with the wave positions of the other two asymmetric fronds **300** in relation to the central axis of the frond unit **301,** **FIG. 17C****.**

The asymmetric fronds **300** of the asymmetric frond unit **301** may be held together additionally by at least one peripheral connecting structure such as radial rings **11** which are affixed to all three asymmetric frond units **301** via the three deformation retaining components **4.**

In one implementation the crenated strip **3** and frond ribbon **2** of the asymmetric frond may be composed of a flexible sheet-like material which allows deformation perpendicular to the plane of the sheet-like material. However, this material may also be substantially non-elastic in the direction parallel to the plane of this sheet-like material, just as a thin stainless steel ruler will readily flex perpendicular to its plane, but resist substantial stretching when either end is pulled in opposite directions. By contrast, the sheet-like material of the connecting strips **80** may be highly elastic in the direction parallel to the plane of the material.

**FIGs. 17D-H** schematically show a sequence of end-on views of an asymmetric frond unit during **301** one half of a cycle of operation. The view is taken from a position downstream of the asymmetric frond unit **301** looking upstream at the end of the asymmetric frond unit **301.** As the wave undulations move either to one side or the other of their neutral wave amplitude, the triangle formed by the three joined connecting strips **80** rotates partially clockwise or counter-clockwise about the longitudinal central axis of the asymmetric frond unit **301.** Because the sheet-like material comprising the crenated strips 3 and frond ribbons **2** is substantially non-elastic in the direction parallel to the plane of the material, and because the sheet-like material comprising the connecting strips **80** is highly elastic in the direction parallel to the plane of the material, under operation the diameter of this triangle expands and contracts in a periodic manner. This occurs because the summed length of crenated strip **3** plus frond ribbon **2** plus connecting strip **80** of each asymmetric frond varies under operation, but only the highly elastic connecting strip **80** is able to change substantially in cross-sectional dimension. **FIGs. 17I-M** illustrate the sequence illustrated in **FIGs. 17D-H** but from a perspective view showing the entire asymmetric frond unit **301.** A fluid contained in the tube formed by the connecting strips **80** may be transported in a longitudinal direction due to forces imposed by the expanding and contracting tube sections.

**FIG. 17N** illustrates the positions that the downstream-ends of the asymmetric fronds **300** take within the wave bulge undulation cycle as shown in **FIGs. 17D-H** and **FIGs. 17 I-M.**

In accordance with yet another embodiment, a plurality of fronds **2,** crenated strips **3** and deformation-retaining components are arranged in a polygonal ring. A hexagonal/dodecagonal ring is chosen here for clarity, but rings with a greater or lesser number of sides are intended to be included in various embodiments. Each frond **2** is mechanically coupled to two other fronds through a flexible band **80** and crenated strips **3** such that the fronds **2,** flexible bands **80** and crenated strips **3** form a tube that in cross-section forms a hexagon **(****FIG. 20A****)** or dodecagon **(****FIG. 20C****),** depending on the position of the cross-section within the cycle of operation as shown in **FIGs. 20A-I,** which also show how the crenated strips **3** and bands **80** form triangles in cross section that rotate clockwise and counter clockwise. A ring comprised of six fronds **2** is illustrated in **FIGs: 18A-B.**

The crenated strips 3 may be mechanically coupled to a sixth deformation-retaining component from the deformation-retaining components. The sixth deformation-retaining component is a hexagonal outer-casing **22** which takes the form of an extruded hexagon and is composed of a rigid material. The fronds are connected to the crenated strips **3** which are connect continuously along the inside corners of the outer-casing **22** via a hinged or flexible connection **25.** Each frond **2** is also connected continuously along both edges via flexible bands **80** to the fronds **2** on either side of it. The junctions of two adjacent fronds and the sixth deformation-retaining component via flexible strips **3** and flexible bands **80,** form a triangular tube **22a**. **FIG. 19** illustrates this triangular tube **22a.**

**FIGs. 20A-1** illustrate a series of cross-sections at a given point during one cycle of operation and **FIG. 21** illustrates the corresponding cycle of operation. In one implementation, one cycle of operation may be defined as the travel of a single wave from outset through transition to the point where this wave takes the position formerly occupied at outset by the next downstream wave.

The wave undulations of the fronds **2** travel along the fronds **2** in the direction **5** of the fluid flow. As a series of undulations pass along the material, a series of strains pass along the material, from which electrical energy is harnessed. The wave undulations of each frond **2** are out-of-phase with wave undulations of adjacent fronds **2.** The triangular cross-sections rotate clockwise and counter-clockwise, accommodating the wave undulations of the fronds **2** and maintaining the synchronization of wave undulations between the fronds **2.**

In another implementation of the polygonal ring pattern, a rigid plate **26** closes off the opening of the triangular tube **22a** to the flow of water, and a series of rigid plates **26** is stacked parallel to this rigid plate **26** along the length of the triangular tube **22a**.

The rigid triangular plates **26** used to close the triangular tube may also be elastic. It should be noted that rigid and elastic plates may affect the behavior of the fronds **2** differently in multiple ways that do not affect the overall principles discussed herein. One effect, however, of utilizing rigid as opposed to elastic plates is that the widths of the fronds **2** may increase and decrease slightly in a periodic manner corresponding to the cycles of operation.

**FIG. 22** and **FIGs. 23A-B** illustrate an implementation of the polygonal ring that may, for example, be utilized in non-free flow applications using rigid plates **26.** Flowing fluid is channeled through a restricted space enclosed on all sides, such as an opening in the wall **25a** of a dam. Each triangular cross-section is closed by a plurality of plates stacked along a longitudinal axis, preventing the fluid from entering the triangular cross-sections. A second rigid hexagonal tube **27** forming a seventh deformation-retaining component is set within the first rigid hexagonal tube **22** so that the fronds occupy a ring of space between the first rigid hexagonal tube **22** and the second rigid hexagonal tube **27.** The upstream end of the second rigid hexagonal tube **27** is closed by a cap **28** to the flow of fluid. In this way, the flowing fluid is forced to enter only through the ring of space occupied by the hexagonal ring of fronds. The inner rigid tube **27** is secured by secondary members **29** to the outer rigid tube **22.**

**FIG. 23C** illustrates yet another polygonal ring implementation in which the rigid triangular plates **26** are mechanically coupled to a ratcheted axle **90** as described above in the asterisk implementations which utilize a ratcheted axle **90,** whereby rotational movement of the rigid plates clockwise and counter-clockwise as described above is mechanically coupled to an electromagnetic generator or other power-receiving output device, such as a pump. In embodiments containing an axle **90,** the axle **90** may serve as a deformation-retaining component.

The polygonal ring implementation described above as suitable for non-free-flow mechanism, and illustrated in **FIGs. 22-23B****,** is nevertheless much less destructive to fish and other aquatic mammals than a conventional hydro-turbine. Depending on the speed of water flow through the mechanism, fish migration upstream is still possible in principle, thus overcoming one of the negative environmental impacts of traditional dammed hydro-electric installations.

In accordance with still another embodiment, a plurality of fronds **2,** flexible or elastic strips **31** and deformation-retaining components may be arranged in a dodecagonal honeycomb. The "cells" of the honeycomb are dodecagonal tubes **30** having six sides which are fronds **2,** and another six sides which are flexible or elastic strips **31.** Each frond **2** is mechanically coupled to flexible or elastic strips **31** along the length of both edges of the frond **2.** A plurality of dodecagonal tubes **30** aligned parallel to each other, and laterally connected to each other, comprise the dodecagonal honeycomb. In cross-section, each dodecagonal tube **30** takes the form of a dodecagon whose cross-sectional shape changes through time during one cycle of operation in a manner which is repeated with each cycle of operation. **FIGs. 24A-E** illustrate a series of sections cut through a dodecagonal tube **30** at a given point during one half of a cycle of operation; and **FIG. 24F** illustrates the corresponding one half of a cycle of operation.

For this dodecagonal honeycomb embodiment, the wave undulations of each frond **2** of a tube **30** are out-of-phase with the wave undulations of its adjacent two fronds **2.** The wave undulations of three fronds **2c** of a tube **30** are synchronized with each other, and are out-of-phase with the wave undulations of the other three fronds **2d** of a tube **30.** The wave undulations of the other three fronds **2d** are synchronized with each other. The force of fluid flowing through the polygonal ring **30** causes the wave undulations to travel down the lengths of the fronds **2** in the direction **5** of the flowing fluid. The sum of the lengths of the sides of the dodecagon remains substantially the same at any point during the cycle of operation because the overall diameter of the dodecagonal tube **30** does not change substantially during operation. When three of the fronds **2** comprising three sides of the dodecagonal tube **30** bulge outwards their most, the other three fronds **2** of the dodecagonal tube **30** bulge inwards their most. In this implementation of the dodecagonal honeycomb, only the elastic strips **31** change in dimension, with a correlating minor change in the sum of the lengths of the sides of the dodecagon. In other implementations, the elastic strips **31** may be comprised of a flexible material which does not change substantially in cross-sectional dimension whereas the fronds **2** do change in cross-sectional dimension, or width. In other implementations, the cross-sectional dimensions of both the elastic strips **31** and fronds **2** may change under operation.

**FIGs. 25A-B** illustrate two sections cuts through a dodecagonal honeycomb formed by a plurality of dodecagonal tubes **30** at a given point during operation. Each dodecagonal tube **30** shares one of its six fronds **2** with a frond **2** from each of the six dodecagonal tubes **30** surrounding it. The junctions of three dodecagonal tubes **30** form a plurality of triangular cross-sections, which include three connecting elastic strips **31** connecting to one frond **2** from each of the three dodecagonal tubes **30.** Since each dodecagonal tube **30** shares fronds **2** with six surrounding dodecagonal tubes **30,** synchronicity of the wave undulations in all the dodecagonal tubes **30** is maintained during each cycle of operation.

**FIGs. 26A-I** illustrate a series of sections cut through the dodecagonal honeycomb at a given position, during one cycle of operation. A cycle of operation may, in some implementations, refer to travel of a single wave from outset through transition to its original position. **FIG. 26J** illustrates points of section cuts relative to this cycle of operation. Each cross-section taking the form of a triangle may be closed by a plurality of plates **32** stacked along the longitudinal axis. During a cycle of operation, the plates **32** rotate clockwise and counter-clockwise in a manner that correlates to the phases of the fronds **2** attached to each of these plates **32.** With reference to **FIGs. 26A-I,** the plates **32** are elastic, and therefore, shrink and expand during each cycle of operation.

**FIGs. 27A-E** illustrate a series of sections cut through the dodecagonal honeycomb at a given position during one half cycle of operation for an implementation in which the plates **32a** are rigid. During operation, the size of each plate **32a** remains constant, thereby causing slight stretching and shrinking of the width of the fronds **2** with the rotation of the plates **32a.**

The eighth deformation-retaining component in this implementation is a plurality of hollow tubes **33** passing through the plurality of rigid plates **32a** of each triangular cross-section along the longitudinal axis. The hollow tubes **33** allow rotational flexing, but are non-elastic along their longitudinal axis and are capable of receiving high tension strains. These hollow tubes **33** may act as deformation-retaining components that keep the potential energy of the applied force **72** within the fronds **2,** thereby preventing the fronds 2 from straightening-out and losing their wave undulations. The tubes **33** may also serve as conduits for electrical wiring associated with the transfer of harnessed electricity.

**FIG. 28A** illustrates the arrangement and sizes relative to each other, of elastic plates **32,** in accordance with an embodiment of the dodecagonal honeycomb described above. **FIG. 28B** illustrates the arrangement of plates for a dodecagonal honeycomb implementation in which the plates are non-elastic **32a.** The sizes of these plates **32a** relative to the lengths of the fronds **2** in cross-section, and the degree of clockwise and counter-clockwise rotation vary in different implementations.

**FIG. 28C** illustrates an implementation in which the rigid plates **32a** are mechanically coupled via a ratchet system to an axle **90,** thereby transferring the rotational movement of the plates **32a** clockwise and counter-clockwise into a unidirectional rotation of the axle **90,** **FIG. 12F****.** In one implementation, the axle may be mechanically coupled to an electromagnetic generator or other power-receiving output device. The relationship of a dodecagonal tube **30** with rigid plates **32a** and axle 90 to surrounding dodecagonal tubes is shown, in one implementation, in **FIG. 28D****.** In some implementations where an axle **90** is present, the axle **90** may form a deformation-retaining component.

**FIG. 28E** illustrates how the dodecagonal honeycomb implementation may be restrained by a ninth deformation-retaining component from the deformation-retaining components. The ninth deformation-retaining component is a polygonal outer-casing **36** or rigid frame. Further, the open central portions of the dodecagonal tubes **30** that receive the flow of fluid can be closed with a tenth deformation-retaining component, such that each dodecagonal tube **30** surrounds a corresponding tenth deformation-retaining component. The tenth deformation-retaining component can be rigid polygonal tubes **27** as described above, where said rigid tubes **27** are fixed to each other and to the polygonal outer-casing **36** via secondary members **29.** These rigid tubes may be closed with a cap **28,** similar to the polygonal ring embodiment shown in **FIGs. 23A-C.** The maximum degree of undulations of the fronds **2** of the dodecagonal tubes **30** may align with the spaces between rigid polygonal tube **27** and adjacent rigid polygonal tubes **27,** thereby restricting the available paths down which the fluid can travel to the spaces occupied by the fronds **2.**

Depending on the speed of water flow and on the number of dodecagonal tubes in honeycomb embodiments, additional secondary structure **500** may be utilized to structurally fix the hollow tubes **33** to the polygonal rigid outer-casing **36,** preventing the honeycomb of tubes from bulging outwards in the direction of the moving fluid and stabilizing the positions of the tubes. In one implementation of a secondary supporting structure, **FIG. 28F****,** rigid beams **500** are secured to and span the opening of the rigid outer casing **36.** Longitudinal struts **501** are secured to the rigid beams **500** and ends of the hollow tubes **33.** Each longitudinal strut **501** connects directly to one hollow tube **33** and indirectly to three surrounding hollow tubes **33** via rigid fins **502.**

Dodecagonal tubes **30** that are at the extremity of the honeycomb share fronds **2** with four instead of six other dodecagonal tubes **30.** These edge-condition dodecagonal tubes **30** are continuously connected via flexible or elastic crenated strips **3** to the polygonal outer-casing **36.**

**FIGs. 29A-B** illustrate how the dodecagonal honeycomb may be attached to the polygonal outer-casing **36** in another implementation. Each edge-condition dodecagonal tube, which is to say each dodecagonal tube that is at the perimeter of the honeycomb, is connected via two flexible or elastic crenated strips **3** to the polygonal outer-casing **36.** The two crenated strips **3** are also connected to longitudinal edges of a flexible or elastic strip **31** which connects one frond **2** to another frond **2** within a single dodecagonal tube **30.** The two flexible or elastic crenated strips **3** and the flexible or elastic strips **31** form a triangular cross-section, which rotates partially clockwise and counter-clockwise during operation.

The number of dodecagonal tubes **30** that can be included in a dodecagonal honeycomb may depend on material strengths, the fluid flow speed and other parameters. Depending on these parameters, a secondary supporting frame can be affixed to the polygonal outer-casing **36** at the upstream-end of the mechanism as described above. In embodiments without the rigid polygonal tube **27** this supporting frame can be attached to each of the dodecagonal tubes **30** via the hollow tubes **33,** transferring operating loads from the fronds **2** and hollow tubes **33** to the polygonal outer-casing **36.**

**FIGs. 30A-B** illustrate the minimum length of the dodecagonal tubes **30** in another implementation, utilizing one half of a cycle of operation.

The octagonal honeycomb embodiment illustrated in **FIG. 30J** shows an example of embodiments comprised of fronds **2** arranged into tubes with a different number of sides than the dodecagonal honeycomb embodiment, and that tubes with any number of sides are included in the scope of other embodiments. In the illustrated embodiment, four fronds **2** are arranged in a ring connected to four elastic connecting strips **31.** The fronds **2** are each connected to one another via connecting strips **31,** creating an octagonal tube. Four connecting strips together form a small square tube, which may be open to the flow of water or closed by elastic plates **85,** which are repeated in a series parallel to each other and along the length of the axis of the square tube. These plates **85** rotate clockwise and counter-clockwise as the wave undulations pass along the fronds **2.** Passing through these plates and secured to each are small hollow tubes **33** described above as the eighth deformation-retaining component in the dodecagonal honeycomb embodiment. These tubes **33** allow twisting clockwise and counter-clockwise but are substantially non-elastic in their longitudinal direction, preventing the fronds from lengthening to their relaxed states.

**FIGs. 30C-30G** illustrate a series of sections cut through the same point during one half of a cycle of operation. **FIG. 30H** illustrates the position of a series of section cuts within this half a cycle of operation. If these plates **85** described above are rigid, and mechanically coupled through a ratchet mechanism to an axle **90,** the rotational movements of the plates clockwise and counter-clockwise can be used to rotate the axles **90,** whereby rotational movement in one direction is mechanically coupled to an electromagnetic generator or other power-receiving output device.

As mentioned above, a second group of patterns consists of two different hexagonal honeycomb embodiments and a concentric ring embodiment. Whereas in the first group the frond **2** is a component in all embodiments of the group, there may be no fronds in this second group. The widths of ribbons comprising the fronds of the first group remain constant under operation in some implementations, and change only slightly in others. Therefore, the sides of tubes comprised of fronds remain fairly constant in width, changing primarily in position, during each cycle of operation. By contrast in this second group described as hexagonal honeycombs and concentric rings, wave bulges in the material comprising the tubes cause the material to expand and contract both longitudinally and laterally. Therefore, the overall diameters of the tubes comprising these embodiments increase and decrease during each cycle of operation. Whereas the summed lengths of the sides of tubes utilizing fronds may remain substantially constant under operation, the summed lengths of sides of tubes that do not utilize fronds may increase and decrease under operation.

**FIGs. 31A-D** illustrate how wave undulations are formed in a circular tube **37.** It should be noted here that an example of a circular tube has been taken, instead of a hexagonal or other polygonal tube for simplicity's sake, but the principles described here apply to the hexagonal tubes of the hexagonal honeycomb embodiments as well as the circular tubes of the concentric ring embodiments and other polygonal tube cross sections and/or tube arrangements. If an elastic circular tube **37** of a given length **37a** has a first force **37c** applied perpendicular to the longitudinal axis of the circular tube **37,** such that the force **37c** bulges-out the circular tube **37** about its circumference, the circular tube **37** will shorten in length **37b.** The circular tube **37** will return to its original shape and length, when the first force **37c** is removed. However, if a second force **37d** is applied such that the longitudinal dimension of the circular tube **37** is restrained, the circular tube **37** is prevented from returning to its original shape. Therefore, the first force **37c** remains as potential energy within the circular tube **37.** If a sufficient third force **37e** is then applied in a direction parallel to the axis of the circular tube **37,** and therefore, obliquely to the face of the wave undulation, the position of the wave undulation will travel in the direction of this third force **37e.** When the wave undulation moves off the end of the circular tube **37,** the potential energy stored in the circular tube **37** from the first force **37c** has not been removed from the circular tube **37.** Therefore, a new wave undulation emerges so that the potential energy of the circular tube **37** remains constant, as long as the circular tube **37** is restrained from returning to its original shape.

**FIGs. 31E-G** illustrate a plurality of tubes **37** of initially uniform circumference along their lengths in their relaxed states that are arranged parallel to each other. The tubes 37 are placed adjacent to one another so that one tube **37** is surrounded by other tubes **37,** running parallel to it. The first force **37c** is applied perpendicular to the axis of the circular rings **37** in a series of evenly spaced locations, both inward and outwards, and in a manner so that each tube **37** has a series of wave undulations that are out-of-phase with tubes **37** adjacent to it. If the tubes **37** are restrained by the second force **37d** as described above, the circular rings **37** are prevented from returning to their original shape. In this way, the first force **37c** remains as potential energy within the tubes **37.** If a sufficient third force **37e** is applied in a direction parallel to the axis of the tubes **37,** and therefore, obliquely to the faces of the wave undulations in the tubes **37,** the positions of the wave undulations travel in the direction of this third force **37e.** Since the potential energy held within the tubes **37** has not been removed after a wave undulation moves off the end of the tubes **37,** a new wave undulation forms at the upstream end of each tube **37** as a wave undulation moves off the end of the tubes **37**.

Because each tube is out-of-phase with all the tubes adjacent to it, the multiple undulations of a single tube resist converging into a single larger bulge in the tube, because each wave bulge on one side of the mid-point of a wave cycle is isolated by adjacent wave bulges that are on the opposite side of the neutral axis. Therefore, when anchored in a flowing fluid whose movement is parallel to the longitudinal axis of the tube, the wave undulations will move along the tube in the direction of the moving fluid. As a series of wave undulations move along the tube, a corresponding series of strains in the material move along the tube, which are converted from mechanical strain within the material into electrical energy, when utilizing an appropriate material exhibiting an electrical response to mechanical strain within that material.

**FIG. 32A** illustrates two possible types of hexagonal tubes for a first hexagonal honeycomb implementation. Six elastic sheets, or six elastic multi-layered sheet, or six elastic woven sheets or six elastic sheets of some other composite material, are connected continuously along their edges to form a hexagonal tube. A first force **37c** is applied adjacent to the central axis of the hexagonal tubes so as to create undulations as described above and illustrated in **FIGs. 31A-G.** Two distinct types of hexagonal tubes, referred to here as a Type A hexagonal tube **38** and a Type B hexagonal tube **39,** are created by different application of the first force **37c,** creating a series of wave undulations along their longitudinal axes. Because these hexagonal tubes are pre-stressed and restrained as described above and as shown in **FIGs. 31A-G**, they maintain a series of wave undulations along their longitudinal axes. The force **37e** of fluid flowing through the polygonal rings causes the positions of the wave undulations to travel down the polygonal tubes in the direction of the fluid flow.

The hexagon shown by a section cut through the Type A hexagonal tube **38** is an equilateral hexagon. During once cycle of operation, the diameter of the Type A hexagon section cut expands and contracts as the wave undulation passes through the region of the section cut.

The sides of the hexagon shown by a section cut through the Type B hexagonal tube **39** vary in size and in proportion to each other over time during one cycle of operation. Each of the six sides of this hexagon lengthens and shortens in synchronization with two other sides of the hexagon. Therefore, at all times during operation, three sides of the hexagon are at one equal length and three sides of the hexagon are at another equal length. Three sides **46** of the hexagon formed by a section cut through the Type B hexagonal tube **39** stretch laterally only. A hollow tube **47** capable of withstanding high tensile forces passes through the longitudinal axis of each of these three sides **46.** These hollow tubes **47** are an eleventh deformation-retaining component which, being in tension, maintains the force **37d,** thereby preventing the Type B hexagonal tube **39** from lengthening and returning to its relaxed, non-undulating state. The hollow tubes **47** may also serve as a principle conduit for electrical wiring associated with the transfer of harnessed electricity.

**FIG. 32B** illustrates the position of section cuts during one cycle of operation; and **FIGs. 33A-I** illustrate a corresponding series of sections cut through the same point during one cycle of operation.

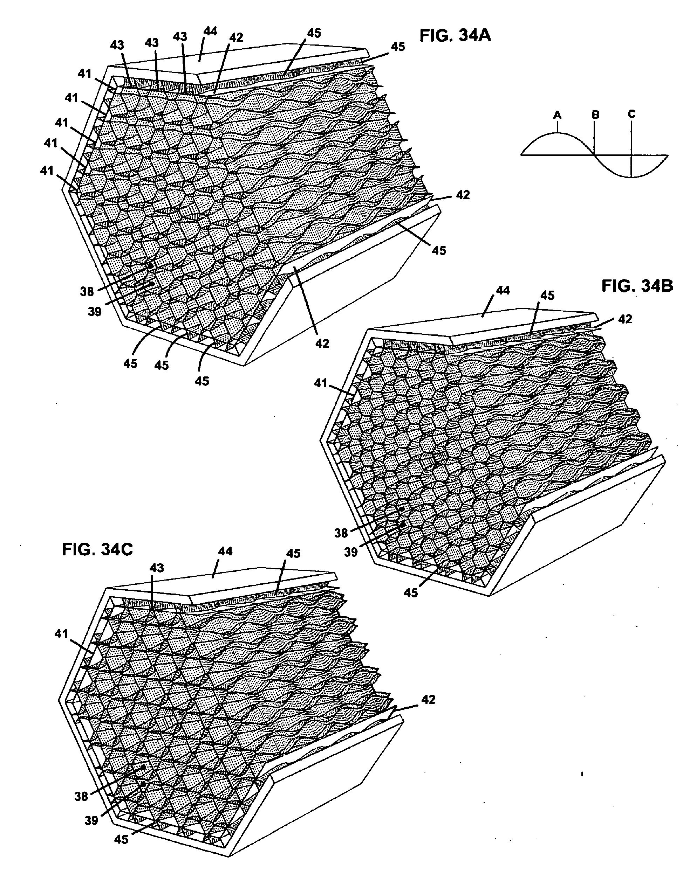

**FIG. 34A** and **FIG. 35** illustrate how a first hexagonal honeycomb may be formed by a plurality of Type A hexagonal tubes **38** and a plurality of Type B hexagonal tubes 39. Each hexagonal tube shares each of its six sides with one side of the six polygonal rings that surround it. Each Type A hexagonal tube **38** is surrounded by six Type B hexagonal tubes **39,** and shares one of its sides with one side each of these six Type B hexagonal tubes **39.** Each Type B hexagonal tube **39** shares three of its sides with one side of three Type A hexagonal tubes **38,** and shares its other three sides with one side of three Type B hexagonal tubes **39.**

Since the Type B hexagonal tubes **39** are restrained and share sides with Type A hexagonal tubes **38,** the Type A hexagonal tubes **38** are also restrained. Further, the wave undulations of the Type A hexagonal tubes **38** and Type B hexagonal tubes **39** are out-of-phase with each other. **FIGs. 34A-C** illustrate a series of three sections cut through the honeycomb at the same point, during one half of a cycle of operation.

Half of the outermost hexagonal tubes **41** are bisected by an elastic membrane **42** and half of the outermost hexagonal tubes **43** share one of their six sides with the elastic membrane **42.** Beyond this elastic membrane is a rigid outer frame or casing **44** which takes the form of an extruded hexagon. Flexible strips **45** connect the elastic membrane **42** to this rigid outer-casing **44.** The edges of the flexible strips **45** that connect to the rigid outer-casing **44** form straight lines, while the edges of the flexible strips **45** that connect to the elastic membrane **42** form waves corresponding to the connecting hexagonal tubes on the other side of the elastic membrane **42.**

Depending on the material strengths, the fluid flow speed and/or other parameters, a secondary supporting structure or frame **500** may be affixed to the rigid outer-casing **44** at the upstream-end, and is also fixed to the upstream end of the hollow tubes **47,** thereby transferring loads from the small rigid tubes **47** to the rigid outer-casing **44.** This secondary supporting structure or frame **500** may, in one implementation, be of a beam or truss design. (see, e.g., **FIG. 28F****,** as configured for operation with tube embodiments).

**FIG. 36** illustrates three types of tubes used in combination for an implementation of the Second Hexagonal Honeycomb embodiment. Six elastic sheets, or six elastic multi-layered sheet, or six elastic woven sheets or six elastic sheets of some other composite material, are connected continuously along their edges to form a hexagonal tube. Two of the tube types, labeled here as a Type C hexagonal tube **49** and Type E hexagonal tube **50,** are created by different application of the first force **37c,** creating a series of wave undulations along their longitudinal axes. Because these hexagonal tubes are pre-stressed and restrained as described above and as shown in **FIGs. 31A-G,** they maintain a series of wave undulations along their longitudinal axes. An additional third hexagonal tube, labeled here as a Type D hexagonal tube **51** is formed as above except that one side of the tube is comprised of a rigid material, which acts as a twelfth deformation-retaining component. Each hexagonal tube may take the form of a hexagon in cross-section.

**FIG. 37** illustrates how a hexagonal honeycomb is formed by a plurality of Type C hexagonal tubes **49,** a plurality of Type D hexagonal tubes **50** and a plurality of Type E hexagonal tubes **51** in one implementation.

The Type C hexagonal tube **49** includes six fronds **52** connected along their edges. Each frond undulates in a wave and grows wider and narrower in synchronicity with the other fronds of the Type C hexagonal tube **49,** thereby creating a series of wave undulations along the length of the Type C hexagonal tube **49.** The force of fluid flowing through the Type C hexagonal tube **49** causes these wave undulations to travel along the length of the Type C hexagonal tube **49** in the direction of the fluid flow. A cross-section cut through this Type C hexagonal tube **49** takes the form of an equilateral hexagon, whose sides lengthen and shorten in synchronicity with each other as the diameter of the hexagon expands and contracts during each cycle of operation.

The Type D hexagonal tube **50** takes the cross-sectional form of a hexagon having one side 53 which remains constant in length during operation, but is varied in position, and is connected to the corners of two Type C hexagonal tubes **49.** The Type D hexagonal tube **50** includes a seventh deformation-retaining component from the deformation-retaining components in the form of its one non-elastic side **54.** The non-elastic side **54** of the Type D hexagonal tube hexagon is constant in length and fixed in position during operation, and is shared with an adjacent Type D hexagonal tube **50.** Two sides **55** of the Type D hexagonal tube hexagon vary in length during operation and are shared with two adjacent Type E hexagonal tube **51.** The other two sides **56** of the Type D hexagonal tube hexagon vary in length during operation and are shared with two adjacent Type C hexagonal tubes **49.**

The Type E hexagonal tube **51** takes the cross-sectional form of a hexagon having two sides **57** of varying lengths during operation that are shared with two adjacent Type C hexagonal tubes **49.** The other four sides **58** of the Type E hexagonal tube hexagon are of varying length during operation and are shared with four Type D hexagonal tubes **50.**

The wave undulations of each Type C hexagonal tube **49** are out-of-phase with the wave undulations of the four closest adjacent Type C hexagonal tubes **49,** being separated from these adjacent Type C hexagonal tubes **49** by Type D hexagonal tubes **50** and Type E hexagonal tubes **51,** as shown in **FIG. 37****.**

Further, a thirteenth deformation-retaining component, the non-elastic side **54** of the Type D hexagonal tube **50,** prevents the tubes from lengthening to their unstressed non-undulating states. The side **54** is capable of withstanding high tension loads without lengthening. Electrical conduits associated with the transfer of harnessed electricity pass along or through the side **54** of the Type D hexagonal tube **50.**

**FIGs. 38-39** illustrate an implementation in which the Type C hexagonal tubes **49** are open at both ends allowing fluid to flow through, while the Type D hexagonal tubes **50** and the Type E hexagonal tubes **51** are closed. The Type D hexagonal tubes **50** and the Type E hexagonal tubes **51** may be closed by a plurality of elastic plates **59a** spaced along the longitudinal axis of the hexagonal tubes.

**FIG. 40** illustrates how the honeycomb may be restrained externally by a fourteenth deformation-retaining component in the form of a rigid outer-casing **47a**, which encloses the hexagonal tubes. The outermost hexagonal tubes of this hexagonal honeycomb embodiment may be fixed to the rigid outer-casing **47a** with flexible strips **47b.** Depending on the material strengths, the fluid flow speed and other parameters, a secondary supporting frame structure **500** is affixed to the rigid outer-casing **47a** at the upstream-end, and is also affixed to the sides **54** of the Type D polygonal rings **50** at the upstream-end, thereby transferring loads from the sides **54** to the rigid outer-casing **47a**. This secondary supporting structure may, in one implementation, be of a beam or truss design.

In another implementation, a plurality of concentric tubes is coupled to internal and external deformation-retaining components. **FIG. 41** illustrates components of this implementation, which may be comprised of a rigid tube **60,** radial membranes **61,** small hollow tubes **63,** and a plurality of concentric tubes **62** one within the other taking the form in cross-section of concentric rings. The rigid tube **60** is a fifteenth deformation-retaining component, the radial membranes **61** are a sixteenth deformation-retaining component, and the small hollow tubes **63** are a seventeenth deformation-retaining component.

A force **37c** as described above is applied to the concentric tubes **62** in a manner so as to form a controlled series of bulge undulations along the lengths of the concentric tubes **62.** The diameter of these concentric tubes **62** is therefore larger at the bulges. The radial membranes are mechanically coupled to each concentric tube **62** continuously along a tangent line of each concentric tube **62.** The radial membranes **61** are mechanically coupled along their outer edges and on their longitudinal axis to the deformation-retaining component of the rigid tube **60**

**FIGs. 42-43** illustrate two views of a longitudinal section cut through the concentric ring embodiment in one implementation. The diameters of the concentric tubes **62** may vary along the lengths of each concentric tube **62,** such as in a periodic manner such that the longitudinal section presents substantially sinusoidal wave undulations.

**FIG. 44** illustrates how the deformation-retaining components restrain the concentric tubes **62.** The deformation-retaining components may further include a plurality of hollow tubes **63** attached to a secondary supporting frame **64** which is itself attached to the rigid tube **60.** These hollow tubes **63** are fixed to radial membranes **61,** which are themselves fixed to the concentric tubes **62.** These hollow tubes **63** are capable of withstanding high tension strains without deformation. Therefore, these hollow tubes **63** maintain the approximate positions of the concentric tubes **62** under the force of flowing fluid.

As described above, the concentric tubes are pre-stressed from their relaxed state so as to form wave undulations along their lengths. The hollow tubes **63** and radial membranes **61** prevent the polygonal rings from lengthening and returning to their unstressed, relaxed state. The hollow tubes **63** may also provide a conduit for electrical wiring associated with retrieval of harnessed electricity.

The radial membranes **61** are elastic in a direction perpendicular to the faces of attached polygonal rings. The radial membranes **61** are non-elastic in the direction parallel to the longitudinal axis of the concentric tubes **62.** Therefore, the radial membranes **61** are able to receive tensile loads. This property of the radial membranes **61** can be achieved in a number of ways. For example, non-elastic cables or strands running parallel to the longitudinal axis may be embedded within the radial membranes **61.**

The concentric tubes **62** can be configured in various ways in different implementations. **FIGs. 45-50** illustrate longitudinal sections cut through the concentric tubes **62,** in accordance with various embodiments. With reference to **FIG. 45****,** the wave undulations of each concentric tube **62** are out-of-phase with the adjacent concentric tube **62** within it and surrounding it.

With reference to **FIG. 46****,** each concentric tube **62** is in-phase with a first adjacent concentric tube **62** and is out-of-phase with a second adjacent concentric tube **62.** The space between the two in-phase concentric tubes is open to the flow of the fluid, while the space between the two out-of-phase concentric tubes is closed. The space between the two out-of-phase concentric tubes may be closed with an elastic plate **65,** such that the fluid passes only between the two in-phase concentric tubes. Alternatively, the space between the two out-of-phase concentric tubes may be closed with elastic plates. These two in-phase concentric tubes **62** are arranged close to each together, thereby forcing the fluid to act more directly upon the concentric tubes **62.**

With reference to **FIG. 47****,** the concentric tubes **62** are in-phase with each other. In such a case, the radial membrane alone acts as the deformation-retaining component, maintaining the occurrence of the wave undulations in the polygonal rings. The central concentric tube **62** is closed with an elastic plate **65.** The space between the outer-most concentric tube **62** and the rigid tube **60** is also closed.

With reference to **FIG. 48****,** each concentric tube **62** is one-half-out-of-phase with the adjacent concentric tubes **62** within it and surrounding it.

With reference to **FIG. 49****,** each concentric tube **62** is one-half-out-of-phase with the adjacent concentric tubes **62** within it and surrounding it, while wave undulations of a first half of each concentric tube **62** are one-half-out-of-phase with wave undulations of a second half of the concentric tube **62.**

With reference to **FIG. 50****,** each concentric tube **62** is in-phase with adjacent polygonal rings within it and surrounding it, while wave undulations of a first half of concentric tubes **62** are one-half-out-of-phase with wave undulations of a second half of concentric tube **62.**

In another implementation, the concentric tubes **62** are configured such that a first point on the section cut of a concentric tube **62** is out-of-phase with a second point 180 degrees from the first point within the section cut. In such a case, the wave undulations along the tube may take the form of a spiral traveling along the length of the concentric tube making it a concentric spiral tube **66.**

**FIG. 51** shows elements of a spiral configuration implementation, illustrating only a single concentric spiral tube **66** and rigid tube **60** for clarity. The wave undulations traveling down the concentric spiral tube **66** cause the surface of the spiral tube to become closer and further away from the rigid tube under operation. **FIGs. 52A-****E** illustrate schematic cross-sections of a rigid tube **60** and spiral tube **66** at single points during one cycle of operation, showing how the space between the spiral tube **66** and rigid tube **60** changes under operation. **FIG. 53** illustrates points within the wave cycle at which the section cuts of **FIGs. 52A-C** were taken.

The concentric rings **62** and **66,** may be employed for an application where the flowing fluid is restricted, such as in a pipe or tunnel. The concentric ring embodiments may be employed for a dammed hydro-electric installation.

**FIG. 53** shows an implementation of one assembly method common to some implementations of pliant mechanisms utilizing fronds, as previously described. An arc-shaped strip of elastic sheet-like material **5301** has a first force applied until the inside edge of the arc is straight **5302** forming a crenated strip with hyperbolic geometry **5303.** A ribbon of elastic material **5304** has forces applied to create undulations/deformations in the ribbon **5305** creating a frond **5306.** The ribbon is fixed to two crenated strips along their crenated/undulating edges **5307.** The straight edges of the crenated strip are fixed to a rigid or tensile deformation-retaining element **5308.** The mechanism is anchored in a moving fluid via an anchoring member **5309.** Energy from the moving fluid is extracted **5310.**

Implementations that do not utilize mechanical action to rotate an axle do not specify in detail how electrical energy is harnessed and which parts components of these embodiments generate electrical energy under operation. Electrical energy may be extracted from any component of the embodiments which is flexed, stretched, compressed or twisted during operation of the mechanism, thereby creating physical strains within the material of the mechanism. Implementations cover the use of any materials which may be employed, existing or to be discovered or invented, that generate electrical energy when flexed, stretched, compressed or twisted, or otherwise receive material strains under operation of the mechanisms.

## Claims

1. A power extraction apparatus for extracting power from a flowing fluid, comprising:
a base member fixed relative to the flowing fluid;
a flexible article connected to the base member that is disposed in contact with the flowing fluid, having at least one contact surface permanently configured with a persistent deformation projecting transverse to a longitudinal axis of the flexible article, the longitudinal axis being oriented substantially parallel to a primary flow direction of the flowing fluid,
wherein the at least one persistent deformation is maintained regardless of the flowing fluid and dynamically undulates in response to forces imposed by the flowing fluid; and
a power extraction component coupled to undulations of the at least one persistent deformation to extract power therefrom.

2. The apparatus of claim 1, wherein the at least one persistent deformation extends longitudinally along the longitudinal axis of the flexible article.

3. The apparatus of claim 1, further comprising:
at least one deformation retaining component connected to the flexible article, wherein the at least one persistent deformation is maintained by the at least one deformation retaining component.

4. The apparatus of claim 3, wherein the flexible article comprises a ribbon, the deformation retaining component comprises a crenated strip having a straight edge and an undulating edge, and
wherein the ribbon is connected along one edge to the undulating edge of the crenated strip.

5. The apparatus of claim 4, wherein the deformation retaining component further comprises:
a support member connected to the straight edge of the crenated strip, wherein the support member exhibits at least one of rigidity and tensility.

6. The apparatus of claim 4, further comprising a second crenated strip having a second straight edge and a second undulating edge and connected to a second edge of the ribbon along the second undulating edge.

7. The apparatus of claim 1, wherein the flexible article comprises a first tube, and the at least one persistent deformation comprises a first persistent bulge in a cross-section of the first tube.

8. The apparatus of claim 7, further comprising
at least one deformation retaining component connected to the first tube, wherein the first persistent bulge is maintained by the at least one deformation retaining component.

9. The apparatus of claim 7, further comprising a second tube situated substantially concentric with the first tube and having at least one second persistent deformation comprising a second persistent bulge in a cross-section of the second tube.

10. The apparatus of claim 7, further comprising:
a second tube connected along its side with a side of the first tube and having at least one second persistent deformation comprising a second persistent bulge in
a cross-section of the second tube.

11. The apparatus of claim 1, wherein the power extraction component is an electrical power extraction component.

12. The apparatus of claim 11, wherein the flexible article comprises electroactive material, and wherein the electrical power extraction component comprises electrodes electrically coupled to the electroactive material to withdraw the electrical power from the undulations of the electroactive material.

13. The apparatus of claim 12, wherein the electrodes extract electrical power associated with strains of the electroactive material caused by the undulations.

14. The apparatus of claim 13, wherein the electroactive material comprises electroactive polymers.

15. The apparatus of claim 1, wherein the power extraction component is a mechanical power extraction component.

16. The apparatus of claim 15, wherein the mechanical power extraction component comprises an electromechanical generator mechanically coupled to the flexible article to convert the mechanical power associated with the undulations to electrical power.

17. The apparatus of claim 15, wherein the mechanical power extraction component is a pump.

18. A method of forming an apparatus for extracting power from a flowing fluid, comprising:
forming a deformation in a flexible article, wherein the deformation is excitable by a flowing fluid in contact with the flexible article to undulate in response to forces imposed by the flowing fluid;
securing the deformation with a first deformation retaining component; and
coupling a power extraction component to the flexible article, wherein the power extraction component is configured to extract power from dynamic undulations of the deformation.

## Patentansprüche

1. Energiegewinnungsvorrichtung, um aus einem strömenden Fluid Energie zu gewinnen, wobei die Vorrichtung umfasst:
ein Basiselement, das relativ zu dem strömenden Fluid befestigt ist;
einen flexiblen Gegenstand, der mit dem Basiselement, das im Kontakt mit dem strömenden Fluid angeordnet ist, verbunden ist und der mindestens eine Kontaktoberfläche aufweist, die mit einer beständigen Verformung, die quer zu einer Längsachse des flexiblen Gegenstands übersteht, dauerhaft konfiguriert ist, wobei die Längsachse zu einer primären Strömungsrichtung des strömenden Fluids im Wesentlichen parallel orientiert ist,
wobei die mindestens eine beständige Verformung ohne Rücksicht auf das strömende Fluid aufrechterhalten wird und sich als Reaktion auf Kräfte, die von dem strömenden Fluid auferlegt werden, dynamisch wellenförmig bewegt; und
eine Energiegewinnungskomponente, die an die Wellenbewegungen der mindestens einen beständigen Verformung gekoppelt ist, um daraus Energie zu gewinnen.

2. Vorrichtung nach Anspruch 1, wobei die mindestens eine beständige Verformung sich längs entlang der Längsachse des flexiblen Gegenstands erstreckt.

3. Vorrichtung nach Anspruch 1, die ferner Folgendes umfasst:
mindestens eine Komponente, die eine Verformung beibehält und die mit dem flexiblen Gegenstand verbunden ist, wobei die mindestens eine beständige Verformung durch die mindestens eine Komponente, die eine Verformung beibehält, aufrechterhalten wird.

4. Vorrichtung nach Anspruch 3, wobei der flexible Gegenstand ein Band umfasst und wobei die Komponente, die eine Verformung beibehält, einen gekerbten Streifen umfasst, der eine gerade Kante und eine wellenförmige Kante aufweist, und
wobei das Band entlang einer Kante mit der wellenförmigen Kante des gekerbten Streifens verbunden ist.

5. Vorrichtung nach Anspruch 4, wobei die Komponente, die eine Verformung beibehält, ferner umfasst:
ein Trägerelement, das mit der geraden Kante des gekerbten Streifens verbunden ist, wobei das Trägerelement eine Steifigkeit und/oder Dehnbarkeit aufweist.

6. Vorrichtung nach Anspruch 4, die ferner einen zweiten gekerbten Streifen umfasst, der eine zweite gerade Kante und eine zweite wellenförmige Kante aufweist, und der mit einer zweiten Kante des Bandes entlang der zweiten wellenförmigen Kante verbunden ist.

7. Vorrichtung nach Anspruch 1, wobei der flexible Gegenstand ein erstes Rohr umfasst und wobei die mindestens eine beständige Verformung eine erste beständige Auswölbung in einem Querschnitt des ersten Rohrs umfasst.

8. Vorrichtung nach Anspruch 7, die ferner umfasst:
mindestens eine Komponente, die eine Verformung beibehält und die mit dem ersten Rohr verbunden ist, wobei die erste beständige Auswölbung durch die mindestens eine Komponente, die eine Verformung beibehält, aufrechterhalten wird.

9. Vorrichtung nach Anspruch 7, die ferner ein zweites Rohr umfasst, das im Wesentlichen konzentrisch um das erste Rohr angeordnet ist und mindestens eine zweite beständige Verformung aufweist, die eine zweite beständige Auswölbung in einem Querschnitt des zweiten Rohrs umfasst.

10. Vorrichtung nach Anspruch 7, die ferner umfasst:
ein zweites Rohr, das entlang seiner Seite mit einer Seite des ersten Rohrs verbunden ist und das mindestens eine zweite beständige Verformung aufweist, die eine zweite beständige Auswölbung in einem Querschnitt des zweiten Rohrs umfasst.

11. Vorrichtung nach Anspruch 1, wobei die Energiegewinnungskomponente eine elektrische Energiegewinnungskomponente ist.

12. Vorrichtung nach Anspruch 11, wobei der flexible Gegenstand ein elektroaktives Material umfasst und wobei die elektrische Energiegewinnungskomponente Elektroden umfasst, die elektrisch mit dem elektroaktiven Material gekoppelt sind, um die elektrische Energie aus den Wellenbewegungen des elektroaktiven Materials zu entnehmen.

13. Vorrichtung nach Anspruch 12, wobei die Elektroden elektrische Energie gewinnen, die mit den Formänderungen des elektroaktiven Materials, die von den Wellenbewegungen verursacht werden, verbunden sind.

14. Vorrichtung nach Anspruch 13, wobei das elektroaktive Material elektroaktive Polymere umfasst.

15. Vorrichtung nach Anspruch 1, wobei die Energiegewinnungskomponente eine mechanische Energiegewinnungskomponente ist.

16. Vorrichtung nach Anspruch 15, wobei die mechanische Energiegewinnungskomponente einen elektromechanischen Generator umfasst, der mit dem flexiblen Gegenstand mechanisch gekoppelt ist, um die mechanische Energie, die mit den Wellenbewegungen verbunden ist, in elektrische Energie umzuwandeln.

17. Vorrichtung nach Anspruch 15, wobei die mechanische Energiegewinnungskomponente eine Pumpe ist.

18. Verfahren zum Herstellen einer Vorrichtung zur Energiegewinnung aus einem strömenden Fluid, das umfasst:
Bilden einer Verformung in einem flexiblen Gegenstand, wobei die Verformung durch ein strömendes Fluid im Kontakt mit dem flexiblen Gegenstand erregbar ist, um sich als Reaktion auf Kräfte, die von dem strömenden Fluid auferlegt werden, wellenförmig zu bewegen;
Sichern der Verformung durch eine erste Komponente, die die Verformung beibehält; und
Koppeln einer Energiegewinnungskomponente mit dem flexiblen Gegenstand, wobei die Energiegewinnungskomponente konfiguriert ist, um Energie aus den dynamischen Wellenbewegungen der Verformung zu gewinnen.

## Revendications

1. Appareil d'extraction de puissance pour extraire une puissance d'un fluide en circulation, comprenant :
un élément de base fixe par rapport au fluide en circulation;
un article souple relié à l'élément de base qui est disposé en contact avec le fluide en circulation, ayant au moins une surface de contact configurée de manière permanente avec une déformation persistante en saillie transversale par rapport à un axe longitudinal de l'article souple, l'axe longitudinal étant orienté sensiblement parallèlement à un sens d'écoulement primaire du fluide en circulation,
dans lequel l'au moins une déformation persistante est maintenue indépendamment du fluide en circulation et ondule de façon dynamique en réponse à des forces imposées par le fluide en circulation ; et
un composant d'extraction de puissance couplé aux ondulations de l'au moins une déformation persistante pour extraire une puissance à partir de là.

2. Appareil selon la revendication 1, dans lequel l'au moins une déformation persistante s'étend longitudinalement le long de l'axe longitudinal de l'article souple.

3. Appareil selon la revendication 1, comprenant en outre :
au moins un composant conservant la déformation relié à l'article souple, dans lequel l'au moins une déformation persistante est maintenue par l'au moins un composant conservant la déformation.

4. Appareil selon la revendication 3, dans lequel l'article souple comprend un ruban, le composant conservant la déformation comprend une bande crénelée ayant un bord droit et un bord onduleux, et
dans lequel le ruban est relié le long d'un bord particulier au bord onduleux de la bande crénelée.

5. Appareil selon la revendication 4, dans lequel le composant conservant la déformation comprend en outre :
un élément de support relié au bord droit de la bande crénelée, dans lequel l'élément de support présente au moins une d'une rigidité et d'une extensibilité.

6. Appareil selon la revendication 4, comprenant en outre une seconde bande crénelée ayant un second bord droit et un second bord onduleux et reliée à un second bord du ruban le long du second bord onduleux.

7. Appareil selon la revendication 1, dans lequel l'article souple comprend un premier tube, et l'au moins une déformation persistante comprend un premier renflement persistant dans une section transversale du premier tube.

8. Appareil selon la revendication 7, comprenant en outre
au moins un composant conservant la déformation relié au premier tube, dans lequel le premier renflement persistant est maintenu par l'au moins un composant conservant la déformation.

9. Appareil selon la revendication 7, comprenant en outre un second tube placé sensiblement concentrique avec le premier tube et ayant au moins une seconde déformation persistante comprenant un second renflement persistant dans une section transversale du second tube.

10. Appareil selon la revendication 7, comprenant en outre :
un second tube relié le long de son côté à un côté du premier tube et ayant au moins une seconde déformation persistante comprenant un second renflement persistant dans une section transversale du second tube.

11. Appareil selon la revendication 1, dans lequel le composant d'extraction de puissance est un composant d'extraction de puissance électrique.

12. Appareil selon la revendication 11, dans lequel l'article souple comprend une matière électro-active, et dans lequel le composant d'extraction de puissance électrique comprend des électrodes électriquement couplées à la matière électro-active pour retirer la puissance électrique des ondulations de la matière électro-active.

13. Appareil selon la revendication 12, dans lequel les électrodes extraient une puissance électrique associée à des contraintes de la matière électro-active provoquées par les ondulations.

14. Appareil selon la revendication 13, dans lequel la matière électro-active comprend des polymères électro-actifs.

15. Appareil selon la revendication 1, dans lequel le composant d'extraction de puissance est un composant d'extraction de puissance mécanique.

16. Appareil selon la revendication 15, dans lequel le composant d'extraction de puissance mécanique comprend un générateur électromécanique mécaniquement couplé à l'article souple pour transformer la puissance mécanique associée aux ondulations en puissance électrique.

17. Appareil selon la revendication 15, dans lequel le composant d'extraction de puissance mécanique est une pompe.

18. Procédé de formation d'un appareil pour extraire une puissance d'un fluide en circulation, comprenant :
la formation d'une déformation dans un article souple, dans lequel la déformation peut être excitée par un fluide en circulation en contact avec l'article souple pour onduler en réponse à des forces imposées par le fluide en circulation ;
la concrétisation de la déformation avec un premier composant conservant la déformation ; et
l'accouplement d'un composant d'extraction de puissance à l'article souple, dans lequel le composant d'extraction de puissance est configuré pour extraire une puissance à partir d'ondulations dynamiques de la déformation.
